(19) Europäisches Patentamt
European Patent Office
Office européen des brevets

(11) **EP 4 059 619 A1**

(12) **EUROPEAN PATENT APPLICATION**
published in accordance with Art. 153(4) EPC

(43) Date of publication:
**21.09.2022 Bulletin 2022/38**

(21) Application number: **20887574.0**

(22) Date of filing: **11.11.2020**

(51) International Patent Classification (IPC):
**B05D 1/36** (2006.01)     **B05D 5/06** (2006.01)
**B05D 7/24** (2006.01)     **B32B 27/20** (2006.01)
**B32B 27/30** (2006.01)     **C09D 5/00** (2006.01)
**C09D 5/02** (2006.01)     **C09D 133/14** (2006.01)
**B32B 15/082** (2006.01)     **C09D 7/43** (2018.01)
**C09D 7/61** (2018.01)     **C09D 7/62** (2018.01)

(52) Cooperative Patent Classification (CPC):
**B05D 1/36; B05D 5/06; B05D 7/24; B32B 15/082;
B32B 27/20; B32B 27/30; C09D 5/00; C09D 5/02;
C09D 7/43; C09D 7/61; C09D 7/62; C09D 133/14**

(86) International application number:
**PCT/JP2020/042037**

(87) International publication number:
**WO 2021/095760 (20.05.2021 Gazette 2021/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.11.2019   JP 2019205552
27.12.2019   JP 2019238571**

(71) Applicant: **Kansai Paint Co., Ltd
Amagasaki-shi, Hyogo 661-8555 (JP)**

(72) Inventors:
• **SAKAI, Kenji
  Hiratsuka-shi, Kanagawa 254-8562 (JP)**
• **NARITA, Nobuhiko
  Hiratsuka-shi, Kanagawa 254-8562 (JP)**

(74) Representative: **Müller-Boré & Partner
Patentanwälte PartG mbB
Friedenheimer Brücke 21
80639 München (DE)**

(54) **AQUEOUS COATING COMPOSITION, COATED ARTICLE, AND METHOD FOR FORMING MULTILAYER COATING FILM**

(57)   The present invention addresses the problem of providing an aqueous paint composition that has a relatively high solid content ratio and that is capable of forming a coating film having excellent brilliance. The present invention provides an aqueous paint composition that contains (A) a water-dispersible hydroxy-containing acrylic resin, (B) a flake-effect pigment, and (C) a water-dispersible cellulose-based rheology control agent, wherein the content of the flake-effect pigment (B) is within a range of 1 to 50 parts by mass based on 100 parts by mass of the resin solids content in the aqueous paint composition, and the aqueous paint composition has a solids content of more than 10 mass% and 35 mass% or less.

EP 4 059 619 A1

Processed by Luminess, 75001 PARIS (FR)

**Description**

Technical Field

Cross-Reference to Related Applications

This application claims priority to Japan Patent Application No. 2019-205552, filed on November 13, 2019, and Japan Patent Application No. 2019-238571, filed on December 27, 2019, and their disclosure are incorporated herein by reference in their entirety. The present invention relates to an aqueous paint composition, a coating article, and a method for forming a multilayer coating film.

Background Art

The main purpose of applying paint to an object is to impart excellent appearance and to protect materials. In the field of automobiles etc., a coating film with excellent brilliance is sometimes used for aesthetic reasons. In order to obtain a coating film with such brilliance, effect pigments are known to be incorporated.

An effect pigment is oriented in parallel to the surface of an object to be coated and is intended to have a unique design feature that its color tone changes depending on the direction from which it is viewed.

This feature of changes in color tone depending on the viewing direction is called "flip-flop property." The greater the change in color tone, the higher the flip-flop property, and the better the brilliance as a coating film containing an effect pigment.

Further, there is recent demand for producing aqueous paint to reduce environmental impact.

For example, Patent Literature (PLT) 1 discloses that an aqueous base paint composition comprising an effect pigment composed of metal flakes obtained by crushing a vapor-deposition metal film, and an aqueous cellulose derivative having an acid value of 20 to 150 mg KOH/g (solids content), wherein the aqueous cellulose derivative serves as a main binder resin, and the effect pigment content is 20 to 70 mass% in terms of PWC, can impart good metallic luster to the resultingcoating film.

Citation List

Patent Literature

PTL 1: JP2009-155537A

Summary of Invention

Technical Problem

In general, a cured coating film obtained by applying a paint composition has greater ability to block substances that degrade the coating film, such as water and air, and better coating film performance as the coating film is thicker. One way to obtain a thick cured coating film without increasing the number of times it is applied is to increase the solids content of the paint to be used.

However, the technique disclosed in Patent Literature (PTL) 1 may not provide sufficient brilliance when the paint has a high solids content.

The present invention was made in view of the above prior art problem. A problem to be solved by the present invention is to provide an aqueous paint composition that has a relatively high solids content and that is capable of forming a coating film with excellent brilliance.

Solution to Problem

The present inventors conducted extensive research to solve the above problem. As a result, the inventors found that the problem can be solved by using an aqueous paint composition comprising (A) a water-dispersible hydroxy-containing acrylic resin, (B) a flake-effect pigment, and (C) a water-dispersible cellulose-based rheology control agent, wherein the content of the flake-effect pigment (B) is within a range of 1 to 50 parts by mass, based on 100 parts by mass of the resin solids content of the aqueous paint composition, and the solids content (the amount of solids contained) in the aqueous paint composition is more than 10 mass% and 35 mass% or less.

Specifically, the present invention provides the following aqueous paint compositions and methods for forming a multilayer coating film.

Item 1.

An aqueous paint composition comprising

(A) a water-dispersible hydroxy-containing acrylic resin,
(B) a flake-effect pigment, and
(C) a water-dispersible cellulose-based rheology control agent,

wherein the content of the flake-effect pigment (B) is within a range of 1 to 50 parts by mass, based on 100 parts by mass of the resin solids content of the aqueous paint composition, and
the aqueous paint composition has a solids content of more than 10 mass% and 35 mass% or less.

Item 2.

The aqueous paint composition according to Item 1, wherein the water-dispersible hydroxy-containing acrylic resin (A) comprises (A') a water-dispersible hydroxy-containing acrylic resin having a core/shell multilayer structure that contains as constituents

a core of a copolymer (I) obtained by copolymerizing 0.1 to 30 mass% of (c) a polymerizable unsaturated monomer having at least two polymerizable unsaturated groups per molecule and 70 to 99.9 mass% of (d) a polymerizable unsaturated monomer having one polymerizable unsaturated group per molecule, and
a shell of a copolymer (II) obtained by copolymerizing 1 to 35 mass% of (a) a hydroxy-containing polymerizable unsaturated monomer, 5 to 60 mass% of (e) a hydrophobic polymerizable unsaturated monomer, and 5 to 94 mass% of (f) a polymerizable unsaturated monomer other than the hydroxy-containing polymerizable unsaturated monomer (a) and the hydrophobic polymerizable unsaturated monomer (e).

Item. 3.

The aqueous paint composition according to Item 1 or 2, wherein the water-dispersible cellulose-based rheology control agent (C) is a water-dispersible cellulose-based rheology control agent containing at least one functional group selected from the group consisting of a phosphate group, a carboxyl group, and a sulfonate group.

Item 4.

A coated article comprising a substrate and a cured coating film formed on the substrate, the cured coating film being formed by curing the aqueous paint composition of any one of Items 1 to 3.

Item 5.

A method for forming a multilayer coating film, the method comprising the steps of

(1) applying a base coat paint composition (X) to a substrate to form an uncured base coating film;
(2) applying a clear coat paint composition (Y) to the uncured base coating film to form an uncured clear coating film; and
(3) heating the uncured base coating film and the uncured clear coating film to simultaneously cure both the coating films;
wherein the base coat paint composition (X) is the aqueous paint composition of any one of Items 1 to 3.

Advantageous Effects of Invention

According to the present invention, there can be provided an aqueous paint composition that has a relatively high solids content and that is capable of forming a coating film with excellent brilliance.

Description of Embodiments

The present invention is described below in more detail. However, the embodiments below are only examples of preferred embodiments. The present invention is not limited to these embodiments.

Aqueous paint composition

The aqueous paint composition of the present invention comprises (A) a water-dispersible hydroxy-containing acrylic resin, (B) a flake-effect pigment, and (C) a water-dispersible cellulose-based rheology control agent, wherein the content of the flake-effect pigment (B) is within a range of 1 to 50 parts by mass, based on 100 parts by mass of the resin solids content of the aqueous paint composition, and the solids content of the aqueous paint composition is more than 10 mass% and 35 mass% or less.

Water-dispersible hydroxy-containing acrylic resin (A)

The water-dispersible hydroxy-containing acrylic resin (A) can be usually produced by copolymerizing a hydroxy-containing polymerizable unsaturated monomer (a) with another polymerizable unsaturated monomer (b), which can be copolymerized with the hydroxy-containing polymerizable unsaturated monomer (a), by using a known method, such as a method of emulsion polymerization in an aqueous medium.

The hydroxy-containing polymerizable unsaturated monomer (a) is a compound containing at least one hydroxyl group and at least one polymerizable unsaturated group per molecule. Examples include monoesters of (meth)acrylic acid with a $C_{2-8}$ dihydric alcohol, such as 2-hydroxyethyl (meth)acrylate, 2-hydroxypropyl (meth)acrylate, 3-hydroxypropyl (meth)acrylate, and 4-hydroxybutyl (meth)acrylate; ε-caprolactone-modified products of such monoesters; N-hydroxymethyl (meth)acrylamide; allyl alcohol; (meth)acrylate having a polyoxyethylene chain having a hydroxyl group at a molecular terminal; and the like.

However, in the present invention, a monomer corresponding to (xvii) the polymerizable unsaturated monomer having an ultraviolet absorbing functional group described below should be defined as (b) another polymerizable unsaturated monomer, which can be copolymerized with the hydroxy-containing polymerizable unsaturated monomer (a) as described above, and the monomer is excluded from the scope of the hydroxy-containing polymerizable unsaturated monomer (a). Such hydroxy-containing polymerizable unsaturated monomers (a) can be used singly or in a combination of two or more.

In the present specification, the polymerizable unsaturated group means an unsaturated group that can be radically polymerized. Examples of such polymerizable unsaturated groups include a vinyl group, a (meth)acryloyl group, a (meth)acrylamide group, a vinyl ether group, an allyl group, a propenyl group, an isopropenyl group, a maleimide group, and the like.

In the present specification, the term "(meth)acrylate" refers to acrylate or methacrylate, and the term "(meth)acrylic acid" refers to acrylic acid or methacrylic acid. The term "(meth)acryloyl" means acryloyl or methacryloyl. Further, the term "(meth)acrylamide" refers to acrylamide or methacrylamide.

Another polymerizable unsaturated monomer (b) that can be copolymerized with the hydroxy-containing polymerizable unsaturated monomer (a) can be appropriately selected according to the properties required of the hydroxy-containing acrylic resin (A). Specific examples of the monomer (b) include compounds described in items (i) to (xix) below. These compounds can be used singly or in a combination of two or more.

(i) Alkyl or cycloalkyl (meth)acrylates: examples include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, dodecyl (meth)acrylate, tridecyl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate, tricyclodecanyl (meth)acrylate, and the like.

(ii) Polymerizable unsaturated monomers having an isobornyl group: examples include isobornyl (meth)acrylate and the like.

(iii) Polymerizable unsaturated monomers having an adamantyl group: examples include adamantyl (meth)acrylate and the like.

(iv) Polymerizable unsaturated monomers having a tricyclodecenyl group: examples include tricyclodecenyl (meth)acrylate and the like.

(v) Aromatic ring-containing polymerizable unsaturated monomers: examples include benzyl (meth)acrylate, styrene, α-methylstyrene, vinyl toluene, and the like.

(vi) Polymerizable unsaturated monomers having an alkoxysilyl group: examples include vinyltrimethoxysilane, vinyltriethoxysilane, vinyl tris(2-methoxyethoxy)silane, γ-(meth)acryloyloxypropyltrimethoxysilane, γ-(meth)acryloyloxypropyltriethoxysilane, and the like.

(vii) Polymerizable unsaturated monomers having a fluorinated alkyl group: examples include perfluoroalkyl (meth)acrylate, such as perfluorobutylethyl (meth)acrylate and perfluorooctylethyl (meth)acrylate; fluoroolefin; and the like.

(viii) Polymerizable unsaturated monomers having a photopolymerizable functional group, such as a maleimide group.

(ix) Vinyl compounds: examples include N-vinylpyrrolidone, ethylene, butadiene, chloroprene, vinyl propionate, vinyl acetate, and the like.

(x) Carboxy-containing polymerizable unsaturated monomers: examples include (meth)acrylic acid, maleic acid, crotonic acid, β-carboxyethyl acrylate, and the like.

(xi) Nitrogen-containing polymerizable unsaturated monomers: examples include (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, 2-(methacryloyloxy) ethyltrimethylammonium chloride, adducts of glycidyl (meth)acrylate with amines, and the like.

(xii) Polymerizable unsaturated monomers having two or more polymerizable unsaturated groups per molecule: examples include allyl (meth)acrylate, ethylene glycol di(meth)acrylate, 1,4-butanediol di(meth)acrylate, neopentyl glycol di(meth)acrylate, 1,6-hexanediol di(meth)acrylate, and the like.

(xiii). Epoxy group-containing polymerizable unsaturated monomers: examples include glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, and the like.

(xiv) (Meth)acrylate having a polyoxyethylene chain having an alkoxy group at a molecular terminal.

(xv) Polymerizable unsaturated monomers having a sulfonate group: examples include 2-acrylamide-2-methylpropanesulfonic acid, 2-sulfoethyl (meth)acrylate, allylsulfonic acid, and 4-styrenesulfonic acid; sodium salts or ammonium salts of these sulfonic acids; and the like.

(xvi) Polymerizable unsaturated monomers having a phosphate group: examples include acid phosphooxyethyl (meth)acrylate, acid phosphooxypropyl (meth)acrylate, acid phosphooxy poly(oxyethylene) glycol (meth)acrylate, acid phosphooxy poly(oxypropylene) glycol (meth)acrylate, and the like.

(xvii) Polymerizable unsaturated monomers having an ultraviolet absorbing functional group: examples include 2-hydroxy-4-(3-methacryloyloxy-2-hydroxypropoxy) benzophenone, 2-hydroxy-4- (3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole, and the like.

(xviii) Light stable polymerizable unsaturated monomers: examples include 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, and the like.

(xix) Polymerizable unsaturated monomers having a carbonyl group: examples include acrolein, diacetone acrylamide, diacetone methacrylamide, acetoacetoxyethyl methacrylate, formylstyrene, vinyl alkyl ketones having 4 to 7 carbon atoms (e.g., vinyl methyl ketone, vinyl ethyl ketone, and vinyl butyl ketone), and the like.

The water-dispersible hydroxy-containing acrylic resin (A) can also be used in combination with a "urethane-modified acrylic resin," which is extended by subjecting some of the hydroxyl groups in the resin to a urethanization reaction with a polyisocyanate compound and thus has a high molecular weight.

The hydroxy-containing polymerizable unsaturated monomer (a) can be generally used in an amount within a range of 1 to 50 mass%, preferably 2 to 40 mass%, and more preferably 3 to 30 mass%, based on the total amount of the monomer (a) and the monomer (b).

From the viewpoint of storage stability and water resistance etc. of the obtained coating film, the hydroxy-containing acrylic resin (A) generally has preferably a hydroxy value of 1 to 200 mg KOH/g, more preferably 2 to 150 mg KOH/g, and particularly preferably 5 to 100 mg KOH/g.

From the standpoint of water resistance of the obtained coating film, the hydroxy-containing acrylic resin (A) generally has preferably an acid value of 1 to 200 mgKOH/g, more preferably 2 to 150 mgKOH/g, and particularly preferably 5 to 80 mgKOH/g.

From the standpoint of, for example, enhancing brilliance of the formed coating film, the water-dispersible hydroxy-containing acrylic resin (A) preferably comprises a water-dispersible hydroxy-containing acrylic resin (A') having a core/shell multilayer structure that contains as constituents

a core of a copolymer (I) obtained by copolymerizing 0.1 to 30 mass% of (c) a polymerizable unsaturated monomer having at least two polymerizable unsaturated groups per molecule and 70 to 99.9 mass% of (d) a polymerizable unsaturated monomer having one polymerizable unsaturated group per molecule, and
a shell of a copolymer (II) obtained by copolymerizing 1 to 35 mass% of (a) a hydroxy-containing polymerizable unsaturated monomer, 5 to 60 mass% of (e) a hydrophobic polymerizable unsaturated monomer, and 5 to 94 mass% of (f) a polymerizable unsaturated monomer other than the hydroxy-containing polymerizable unsaturated monomer (a) and the hydrophobic polymerizable unsaturated monomer (e).

Examples of the polymerizable unsaturated monomer having at least two polymerizable unsaturated groups per molecule (c), which is a component of the core, include allyl(meth)acrylate, ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-trishydroxymethyl ethanedi(meth)acrylate, 1,1,1-trishydroxymethylene tri(meth)acrylate, 1,1,1-trishydroxymethylpropane tri(meth)acrylate, triallyl isocyanurate, diaryl terephthalate, divinylbenzene, and the like. These can be used singly or in a combination with two or more.

The polymerizable unsaturated monomer having at least two polymerizable unsaturated groups per molecule (c) can be generally used in an amount within a range of 0.1 to 30 mass%, preferably 0.5 to 10 mass%, and more preferably 1 to 5 mass%, based on the total mass of the monomer (c) and the monomer (d).

The polymerizable unsaturated monomer having one polymerizable unsaturated group per molecule (d), which is a component of the core, is a polymerizable unsaturated monomer that can be copolymerized with the polymerizable unsaturated monomer having at least two polymerizable unsaturated groups per molecule (c). Examples include compounds containing one polymerizable unsaturated group, such as a vinyl group, a (meth)acryloyl group, or an allyl group, per molecule.

Specific examples of the polymerizable unsaturated monomer having one polymerizable unsaturated group per molecule (d) include alkyl or cycloalkyl (meth)acrylate, such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, Isostearyl Acrylate (trade name; produced by Osaka Organic Chemical Industry Ltd.), cyclohexyl (meth)acrylate, methylcyclohexyl (meth)acrylate, tert-butylcyclohexyl (meth)acrylate, and cyclododecyl (meth)acrylate; isobornyl-containing unsaturated monomers, such as isobornyl (meth)acrylate; adamantyl-containing unsaturated monomers, such as adamantyl (meth) acrylate; vinyl aromatic compounds, such as styrene, $\alpha$-methylstyrene,and vinyltoluene; monoesters of (meth)acrylic acid with a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; $\varepsilon$-caprolactone-modified compounds of monoesters of (meth)acrylic acid with dihydric alcohols having 2 to 8 carbon atoms; allyl alcohol; hydroxy-containing polymerizable unsaturated monomers, such as (meth)acrylates having a polyoxyethylene chain having a hydroxyl group at a molecular terminal; carboxy-containing polymerizable unsaturated monomers, such as (meth)acrylic acid, maleic acid, crotonic acid, and $\beta$-carboxyethyl acrylate; nitrogen-containing polymerizable unsaturated monomers, such as (meth)acrylonitrile, (meth)acrylamide, dimethylaminopropyl (meth)acrylamide, dimethylaminoethyl (meth)acrylate, and adducts of glycidyl (meth)acrylate with amines; and the like. These can be used singly or in a combination of two or more.

Examples of the hydroxy-containing polymerizable unsaturated monomer (a), which is a component of the shell, include monoesters of (meth)acrylic acid with a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; $\varepsilon$-caprolactone-modified compounds of the monoesters of (meth)acrylic acid with dihydric alcohols having 2 to 8 carbon atoms; allyl alcohol; (meth)acrylates having a polyoxyethylene chain having a hydroxyl group at a molecular terminal; and the like. These can be used singly or in a combination of two or more.

The hydroxy-containing polymerizable unsaturated monomer (a) can be generally used in an amount of 1 to 35 mass%, preferably 5 to 25 mass%, and more preferably 8 to 20 mass%, based on the total mass of the monomer (a), monomer (e), and monomer (f).

Examples of the hydrophobic polymerizable unsaturated monomer (e), which is a component of the shell, include polymerizable unsaturated monomers containing a linear, branched or cyclic, saturated or unsaturated hydrocarbon group containing 6 or more carbon atoms. Specific examples include alkyl or cycloalkyl (meth)acrylates, such as n-hexyl (meth)acrylate, n-octyl (meth)acrylate, 2-ethylhexyl (meth)acrylate, nonyl. (meth)acrylate, tridecyl (meth)acrylate, lauryl (meth) acrylate, stearyl (meth)acrylate, Isostearyl Acrylate (trade name; produced by Osaka Organic Chemical Industry Ltd.), cyclohexyl (meth)acrylate, methylcyclohexyl (meth)acrylate, tert-butylcyclohexyl (meth)acrylate, and cyclododecyl (meth)acrylate; isobornyl-containing unsaturated monomers, such as isobornyl (meth)acrylate; adamantyl-containing unsaturated monomers, such as adamantyl (meth) acrylate; vinyl aromatic compounds, such as styrene, $\alpha$-methylstyrene,and vinyltoluene; and the like. These can be used singly or in a combination of two or more. The upper limit of the number of carbons of the linear, branched, or cyclic, saturated or unsaturated hydrocarbon group having 6 or more carbon atoms is not limited. For example, the number of carbon atoms is 18 or less, and preferably 13 or less, and more preferably 8 or less. The hydrophobic polymerizable unsaturated monomer (e) used for the water-dispersible hydroxy-containing acrylic resin (A') is preferably a vinyl aromatic compound and particularly preferably styrene from the viewpoint of smoothness and distinctness of image of the formed coating film.

Preferably, the hydrophobic polymerizable unsaturated monomer (e) generally is preferably used in an amount in the range of 5 to 60 mass%, more preferably 8 to 40 mass%, and particularly preferably 9 to 25 mass%, based on the total amount of the monomer (a), monomer (e), and monomer (f).

Examples of the polymerizable unsaturated monomer (f), i.e., a polymerizable unsaturated monomer other than the hydroxy-containing polymerizable unsaturated monomer (a) and the hydrophobic polymerizable unsaturated monomer (e), which is a component of the shell, include alkyl or cycloalkyl (meth)acrylate, such as methyl (meth)acrylate, ethyl (meth)acrylate, n-propyl (meth)acrylate, isopropyl (meth)acrylate, n-butyl (meth)acrylate, isobutyl (meth)acrylate, and tert-butyl (meth)acrylate; and carboxy-containing polymerizable unsaturated monomers, such as (meth)acrylic acid, maleic acid, crotonic acid, and β-carboxyethyl acrylate. These can be used singly or in a combination of two or more. Examples of alkyl (meth)acrylate included in the polymerizable unsaturated monomer (f) include alkyl (meth)acrylates having 1 to 5 carbons in the alkyl moiety, and preferably alkyl (meth)acrylates having 1 to 4 carbons in the alkyl moiety.

The polymerizable unsaturated monomer (f), which is a polymerizable unsaturated monomer other than the hydroxy-containing polymerizable unsaturated monomer (a) and the hydrophobic polymerizable unsaturated monomer (e), preferably contains, as at least a part of the component, a carboxy-containing polymerizable unsaturated monomer (g) from the viewpoint of ensuring the smoothness of the formed coating film.

Examples of the carboxy-containing polymerizable unsaturated monomer (g) include (meth)acrylic acid, maleic acid, crotonic acid, β-carboxyethyl acrylate, and the like. Among these, (meth)acrylic acid is preferable.

From the standpoint of, for example, stability of the water-dispersible hydroxy-containing acrylic resin (A') in the aqueous medium and smoothness and water resistance of the formed coating film, the carboxy-containing polymerizable unsaturated monomer (g) generally is preferably 1 to 40 mass%, more preferably 6 to 25 mass%, and particularly preferably 11 to 19 mass%, based on the total mass of the monomer (a), monomer (e), and monomer (f).

From the standpoint of, for example, water resistance of the formed coating film, the water-dispersible hydroxy-containing acrylic resin (A') generally has preferably a hydroxy value of 1 to 70 mg KOH/g, more preferably 2 to 60 mg KOH/g, and particularly preferably 5 to 45 mg KOH/g.

From the standpoint of, for example, storage stability and water resistance of the formed coating film, the water-dispersible hydroxy-containing acrylic resin (A') generally has preferably an acid value of 5 to 90 mg KOH/g, more preferably 10 to 70 mg KOH/g, and particularly preferably 15 to 50 mg KOH/g.

From the viewpoint of preventing occurrence of metallic unevenness of the formed coating film and improving the flip-flop property, polymerizable unsaturated monomers containing only one polymerizable unsaturated group per molecule are preferably used as monomer (a), monomer (e), and monomer (f), and the shell of the water-dispersible hydroxy-containing acrylic resin (A') is preferably not crosslinked.

The water-dispersible hydroxy-containing acrylic resin (A') can be obtained, for example, by adding a monomer mixture (II) that contains 1 to 35 mass% of the hydroxy-containing polymerizable unsaturated monomer (a), 5 to 60 mass% of the hydrophobic polymerizable unsaturated monomer (e), and 5 to 94 mass% of the polymerizable unsaturated monomer (f), which is a polymerizable unsaturated monomer other than the monomer (a) and monomer (d), to an emulsion that is obtained by emulsion-polymerization of a monomer mixture (I) that contains 0.1 to 30 mass% of the polymerizable unsaturated monomer (c) having at least two polymerizable unsaturated groups per molecule, and 70 to 99.9 mass% of the polymerizable unsaturated monomer (d) having one polymerizable unsaturated group per molecule, and polymerizing them.

The emulsion polymerization of the monomer mixture can be performed by a known method, such as by using a polymerization initiator in the presence of an emulsifier.

The emulsifier is preferably an anionic emulsifier or a nonionic emulsifier. Examples of the anionic emulsifier include sodium salts or ammonium salts of organic acids, such as alkyl sulfonic acid, alkylbenzene sulfonic acid, and alkyl phosphoric acid. Examples of the nonionic emulsifier include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan monostearate, sorbitan triolate, polyoxyethylene sorbitan monolaurate, and the like.

For example, polyoxyalkylene group-containing anionic emulsifiers having an anionic group and a polyoxyalkylene group, such as a polyoxyethylene group or a polyoxypropylene group, per molecule, or reactive anionic emulsifiers having an anionic group and a radical polymerizable unsaturated group per molecule can be used. Among these, reactive anionic emulsifiers are preferably used.

Examples of the reactive anionic emulsifiers include sodium salts or ammonium salts of sulfonic acid compounds having a radical polymerizable unsaturated group, such as a (meth)allyl group, a (meth)acryloyl group, a propenyl group, or a butenyl group. Among these, ammonium salts of sulfonic acid compounds having a radical polymerizable unsaturated group are preferred because the formed coating film has excellent water resistance. Examples of the ammonium salts of sulfonic acid compounds include commercially available products, such as Latemul S-180A (trade name; produced by Kao Corporation).

Among the ammonium salts of a sulfonic acid compound having a radical polymerizable unsaturated group, ammonium salts of sulfonic acid compounds having a radical polymerizable unsaturated group and a polyoxyalkylene group are more preferred. Examples of the ammonium salts of sulfonic acid compounds having a radical polymerizable unsaturated group and a polyoxyalkylene group include commercially available products, such as Aqualon KH-10 (trade name; produced by DKS Co. Ltd.) and SR-1025A (trade name; produced by Adeka Corporation).

The emulsifier can be generally used in an amount within a range of 0.1 to 15 mass%, preferably 0.5 to 10 mass%, and more preferably 1 to 5 mass%, based on the total amount of the monomers used.

The polymerization initiator can be an oil-soluble polymerization initiator or a water-soluble polymerization initiator. Examples include organic peroxides, such as benzoyl peroxide, octanoyl peroxide, lauroyl peroxide, stearoyl peroxide, cumene hydroperoxide, tert-butyl peroxide, tert-butyl peroxylaurate, tert-butyl peroxyisopropyl carbonate, tert-butyl peroxyacetate, and diisopropylbenzene hydroperoxide; azo compounds, such as azobisisobutyronitrile, azobis(2,4-dimethylvaleronitrile), azobis(2-methylpropionnitrile), azobis(2-methylbutyronitrile), 4,4'-azobis(4-cyanobutanoic acid), dimethylazobis(2-methylpropionate), azobis[2-methyl-N-(2-hydroxyethyl)propionamide], and azobis{2-methyl-N-[2-(1-hydroxybutyl)]propionamide}; persulfates, such as potassium persulfate, ammonium persulfate, and sodium persulfate; and the like. These can be used singly or in a combination of two or more.

If necessary, the polymerization initiator can be combined with a reducing agent, such as sugar, sodium formaldehyde sulfoxylate, or an iron complex, to make a redox polymerization system.

The amount of the polymerization initiator used generally is preferably 0.1 to 5 mass%, and more preferably 0.2 to 3 mass%, based on the total mass of the monomers used. The method for adding the polymerization initiator is not particularly limited, and can be suitably selected according to the type, amount, etc. of polymerization initiator. For example, the polymerization initiator may be incorporated into a monomer mixture or an aqueous medium beforehand, or may be added all at once or dropwise at the time of the polymerization.

The water-dispersible hydroxy-containing acrylic resin (A') can be obtained by adding a monomer mixture (II) that contains the hydroxy-containing polymerizable unsaturated monomer (a), the hydrophobic polymerizable unsaturated monomer (e), and the polymerizable unsaturated monomer (f), which is a polymerizable unsaturated monomer other than the monomer (a) and the monomer (e), to the emulsion obtained as described above.

If necessary, the monomer mixture (II) can appropriately contain components such as a polymerization initiator, a chain transfer agent, a reducing agent, and an emulsifier as listed above.

The monomer mixture (II) can be added dropwise as is, but is preferably dispersed in an aqueous medium and then added dropwise as a monomer emulsion. The particle size of the monomer emulsion in this case is not particularly limited.

The polymerization of the monomer mixture (II) can be performed, for example, by adding the monomer mixture (II), which may be emulsified, to the emulsion all at once or dropwise, and heating the mixture to an appropriate temperature while stirring.

The water-dispersible hydroxy-containing acrylic resin (A') obtained as described above can have a core/shell multilayer structure in which a copolymer (I), which is formed from the monomer mixture (I) containing the polymerizable unsaturated monomer (c) having at least two polymerizable unsaturated groups per molecule and the polymerizable unsaturated monomer (d) having one polymerizable unsaturated group per molecule, constitutes the core, and a copolymer (II), which is formed from the monomer mixture (II) containing the hydroxy-containing polymerizable unsaturated monomer (a), the hydrophobic polymerizable unsaturated monomer (e), and the polymerizable unsaturated monomer (f), which is a polymerizable unsaturated monomer other than the monomers (a) and (e), constitutes the shell.

The water-dispersible hydroxy-containing acrylic resin (A') can be resin particles formed of three or more layers by adding, between a step of obtaining the copolymer (I) and a step of obtaining the copolymer (II), a step of performing emulsion polymerization by supplying at least one polymerizable unsaturated monomer (one kind or a mixture of two or more kinds of polymerizable unsaturated monomers) for forming another resin layer.

In the present invention, the "shell" of the water-dispersible hydroxy-containing acrylic resin (A') means a polymer layer that is present in the outermost layer of resin particles, the "core" means a polymer layer of an inner layer of resin particles, excluding the shell part, and the "core/shell structure" means a structure that has the core and the shell. As the core/shell structure, a layer structure in which the core is completely covered with the shell is common, but the amount of monomers of the shell may be insufficient to form such a layer structure, depending on the mass ratio of the core and the shell. In such a case, the core/shell structure is not necessary to be a complete layer structure as described above. The core/shell structure can be a structure in which a part of the core is covered with the shell, or a structure in which a polymerizable unsaturated monomer, which is a component of the shell, is graft-polymerized with a part of the core. The concept of the multilayer structure in the core/shell structure also applies to the case in which a multilayer structure is formed in the core of the water-dispersible hydroxy-containing acrylic resin (A').

From the viewpoint of preventing occurrence of metallic unevenness of the formed coating film and improvement of the flip-flop property, the solids mass ratio of the copolymer (I) to the copolymer (II) in the water-dispersible hydroxy-containing acrylic resin (A') having a core/shell multilayer structure generally is preferably within a range of 10/90 to 90/10, more preferably 50/50 to 85/15, and particularly preferably 65/35 to 80/20.

The water-dispersible hydroxy-containing acrylic resin (A') obtained as described above can generally have an average particle size of 10 to 1,000 nm, and particularly 20 to 500 nm. The average particle size of the hydroxy-containing acrylic resin is a value measured at a measurement temperature of 20°C by a Coulter counter method. This measurement can be performed, for example, by using a Coulter N4 (trade name; produced by Beckman Coulter Corporation).

In order to improve the mechanical stability of the aqueous dispersion particles of the obtained water-dispersible hydroxy-containing acrylic resin (A'), it is desirable to neutralize acidic groups, such as carboxyl groups of the water-dispersible hydroxy-containing acrylic resin (A'), with a neutralizing agent. The neutralizing agent can be used without particular limitation as long as it can neutralize acidic groups. Examples include sodium hydroxide, potassium hydroxide, trimethylamine, 2-(dimethylamino)ethanol, 2-amino-2-methyl-1-propanol, triethylamine, and aqueous ammonia. It is desirable that these neutralizing agents are used in such an amount that the aqueous dispersion of the water-dispersible hydroxy-containing acrylic resin (A') after neutralization has a pH of about 6.5 to 9.0.

Flake-effect pigment (B)

Examples of the flake-effect pigment (B) in the aqueous paint composition of the present invention include aluminum flake pigments, vapor-deposition metal flake pigments, light interference pigments, and the like. One or a combination of two or more of these pigments can be appropriately selected according to the texture desired for the coating film and used.

The aluminum flake pigment is generally produced by crushing and grinding aluminum by using a grinding aid in a ball mill or attritor mill in the presence of a grinding liquid medium. Examples of the grinding aids for use in the production step of the aluminum flake pigment include higher fatty acids, such as oleic acid, stearic acid, isostearic acid, lauric acid, palmitic acid, and myristic acid; and aliphatic amines, aliphatic amides, and aliphatic alcohols. Examples of the grinding liquid media for use include aliphatic hydrocarbons, such as a mineral spirit.

The aluminum flake pigment is roughly classified into leafing aluminum flake pigments and non-leafing aluminum flake pigments according to the type of grinding aid. From the standpoint of forming a coating film that has excellent water resistance and high brilliance, a non-leafing flake-aluminum pigment is preferably used in the aqueous paint composition of the present invention. The non-leafing flake-aluminum pigment for use may be a pigment whose surface is not particularly treated or a pigment that is surface-treated. Examples of the non-leafing flake-aluminum pigment that is surface-treated include those whose surface is coated with a resin, those whose surface is treated with silica, those whose surface is treated with phosphoric acid or a resin containing a phosphate group, those whose surface is treated with molybdic acid, those whose surface is treated with a silane coupling agent, and the like. The surface-treated non-leafing flake-aluminum pigment for use may be a pigment subjected to one or more of the various surface treatments described above.

The aluminum flake pigment for use can be a colored aluminum pigment prepared by coating the surface of an aluminum flake pigment with a color pigment and further coating it with a resin, or a colored aluminum pigment prepared by coating the surface of an aluminum flake pigment with a metal oxide, such as iron oxide.

From the standpoint of forming a coating film with excellent brilliance, the aluminum flake pigment for use preferably has an average particle size of 1 to 100 $\mu$m, more preferably 5 to 50 $\mu$m, and particularly preferably 7 to 30 $\mu$m. The aluminum flake pigment for use preferably has a thickness of 0.01 to 1.0 $\mu$m, and particularly preferably 0.02 to 0.5 $\mu$m.

The "average particle size" of the flake-effect pigment (B) in the present invention refers to the median size in a volume-based particle size distribution measured by laser diffraction scattering with a MT3300 Microtrac particle size distribution analyzer (trade name; produced by Nikkiso Co., Ltd.). The "thickness" of the flake-effect pigment (B) is defined as the average value determined by measuring the thickness using image processing software while observing the cross-sectional surface of a coating film that contains the flake-effect pigment (B) with a microscope, and calculating the average value of 100 or more particles.

The vapor deposition metal flake pigment is obtained by vapor-depositing a metal film on a base material, peeling the base material, and then grinding the vapor deposition metal film. Examples of the base material include films and the like.

The material of the metal is not particularly limited. Examples include aluminum, gold, silver, copper, brass, titanium, chromium, nickel, nickel chromium, stainless steel, and the like. Of these, aluminum or chromium is particularly preferable from the standpoint of, for example, availability and ease of handling. In the present specification, a vapor deposition metal flake pigment obtained by vapor-depositing aluminum refers to a "vapor deposition aluminum flake pigment," and a vapor deposition metal flake pigment obtained by vapor-depositing chromium refers to a "vapor deposition chromium flake pigment."

The vapor deposition metal flake pigment for use can be a vapor deposition metal flake pigment formed from a single layer of a vapor deposition metal film, or may be a vapor deposition metal flake pigment formed from a multilayer composed of a vapor deposition metal film and additional other metal or metal oxide.

The vapor deposition aluminum flake pigment is preferably surface-treated with silica from the standpoint of, for example, storage stability and obtaining a coating film with excellent brilliance.

Examples of commercial products that can be used as the vapor deposition aluminum flake pigment include the Metalure series (trade name; produced by Eckart), Hydroshine WS series (trade name; produced by Eckart), Decomet series (trade name; produced by Schlenk), Metasheen series (trade name; produced by BASF), and the like.

Examples of commercial products that can be used as the vapor deposition chromium flake pigment include the Metalure Liquid Black series (trade name; produced by Eckart) and the like.

The average thickness of the vapor deposition metal flake pigment is preferably 0.01 to 1.0 $\mu$m, and more preferably 0.015 to 0.1 $\mu$m.

The vapor deposition metal flake pigment preferably has an average particle size (D50) of 1 to 50 $\mu$m, and more preferably 5 to 20 $\mu$m.

The interference pigment for use is preferably an interference pigment prepared by coating a transparent or translucent base material with titanium oxide. In the present specification, the transparent base material refers to a base material through which at least 90% of visible light is transmitted. The translucent base material refers to a base material through which at least 10% and less than 90% of visible light is transmitted.

Interference pigments are effect pigments obtained by coating the surface of a transparent or translucent flaky base material, such as mica, synthetic mica, glass, iron oxide, aluminum oxide, or various other metal oxides, with a metal oxide having a refractive index different from that of the base material. Examples of the metal oxides include titanium oxide, iron oxide, and the like. Interference pigments can develop various different interference colors, depending on the difference in the thickness of the metal oxide.

Specific examples of interference pigments include metal oxide-coated mica pigments, metal oxide-coated alumina flake pigments, metal oxide-coated glass flake pigments, metal oxide-coated silica flake pigments, and the like described below.

Metal oxide-coated mica pigments are pigments obtained by coating the surface of a natural mica or synthetic mica base material with a metal oxide. Natural mica is a flaky base material obtained by pulverizing mica from ore. Synthetic mica is synthesized by heating an industrial material, such as $SiO_2$, $MgO$, $Al_2O_3$, $K_2SiF_6$, or $Na_2SiF_6$, to melt the material at a high temperature of about 1500°C, and cooling the melt for crystallization. When compared with natural mica, synthetic mica contains a smaller amount of impurities and has a more uniform size and thickness. Specific examples of synthetic mica base materials include fluorophlogopite ($KM_{93}AlSi_3O_{10}F_2$), potassium tetrasilicon mica ($KMg_{2.5}AlSi_4O_{14}F_2$), sodium tetrasilicon mica ($NaMg_{2.5}AlSi_4O_{10}F_2$), Na taeniolite ($NaMg_2LiSi_4O_{10}F_2$), LiNa taeniolite ($LiMg_2LiSi_4O_{10}F_2$), and the like.

Metal oxide-coated alumina flake pigments are pigments obtained by coating the surface of an alumina flake base material with a metal oxide. Alumina flakes refer to flaky (thin) aluminum oxides, which are clear and colorless. Alumina flakes do not necessarily consist of only aluminum oxide and may contain other metal oxides.

Metal oxide-coated glass flake pigments are pigments obtained by coating the surface of a flaky glass base material with a metal oxide. The metal oxide-coated glass flake pigments have a smooth base material surface, which causes intense light reflection.

Metal oxide-coated silica flake pigments are pigments obtained by coating flaky silica, which is a base material having a smooth surface and a uniform thickness, with a metal oxide.

The interference pigments may be subjected to surface treatment in order to improve dispersibility, water resistance, chemical resistance, weather resistance, or the like.

The interference pigment preferably has an average particle size of 5 to 30 $\mu$m, and particularly preferably 7 to 20 $\mu$m, in view of obtaining a coating film with excellent brilliance.

The interference pigment preferably has a thickness of 0.05 to 1 $\mu$m, and particularly preferably 0.1 to 0.8 $\mu$m, from the standpoint of obtaining a coating film with excellent pearly luster.

The flake-effect pigment (B) in the aqueous paint composition preferably has an average particle size in the range of 1 to 100 $\mu$m, more preferably 5 to 50 $\mu$m, and particularly preferably 7 to 30 $\mu$m, from the standpoint of forming a dense coating film with metallic or pearly luster that exhibits excellent high gloss in highlight and lower graininess. The flake-effect pigment (B) preferably has a thickness in the range of 0.01 to 1.0 $\mu$m, and particularly preferably in the range of 0.02 to 0.5 $\mu$m.

Mater-dispersible cellulose-based rheology control agent (C)

The water-dispersible cellulose-based rheology control agent in the aqueous paint composition of the present invention is preferably cellulose nanofibers and/or cellulose nanocrystals from the standpoint of obtaining a coating film with excellent brilliance.

The cellulose nanofibers may also be referred to as "cellulose nanofibrils" or "fibrillated cellulose." The cellulose nanocrystals may also be referred to as "nanocellulose crystals."

The cellulose nanofibers preferably have a number average fiber diameter within a range of 2 to 500 nm, more preferably 2 to 250 nm, and even more preferably 2 to 150 nm, from the standpoint of obtaining a coating film with excellent brilliance. The cellulose nanofibers preferably have a number average fiber length within a range of 0.1 to 20 $\mu$m, more preferably 0.1 to 15 $\mu$m, and even more preferably 0.1 to 10 $\mu$m. The aspect ratio determined by dividing the number average fiber length by the number average fiber diameter is preferably within a range of 50 to 10000, more preferably 50 to 5000, and even more preferably 50 to 1000.

The number average fiber diameter and number average fiber length are measured and calculated from, for example, an image obtained by subjecting a sample, which is cellulose nanofibers diluted with water, to a dispersion treatment, casting the sample on a grid coated with a carbon film that has been subjected to a hydrophilic treatment, and observing the sample with a transmission electron microscope (TEM).

The cellulose nanofibers for use are preferably obtained by defibrating a cellulose material and stabilizing the defibrated material in water.

The cellulose nanofibers to be used are preferably an aqueous dispersion obtained by anionically modifying a cellulose material by a known method, subjecting the modified cellulose material to various treatments, and dispersing the resulting material in an aqueous solvent. For example, cellulose nanofibers prepared as follows are preferably used. A group such as a carboxyl group, a carboxymethyl group, a phosphate group, or a sulfonic acid group is introduced into a cellulose material by a known method, and the obtained modified cellulose is washed to prepare a dispersion of the modified cellulose, followed by adding a mechanical shear force to this dispersion to defibrate the modified cellulose.

Examples of commercially available products of cellulose nanofibers include Rheocrysta (registered trademark) produced by DKS Co., Ltd., Aurovisc (registered trademark) produced by Oji Holdings Corporation, and the like. Examples of commercially available products of cellulose nanocrystals include Celluforce NCC produced by CelluForce, Inc. In the present invention, for example, cellulose nanofibers prepared in the following manner can be used. The cellulose nanofibers described above are produced, for example, by the following method.

A group such as a carboxyl group, a carboxymethyl group, a phosphate group, or a sulfonic acid group is introduced into a cellulose material by a known method, and the obtained modified cellulose is washed to prepare a dispersion of the modified cellulose. A mechanical shear force is applied to the dispersion to defibrate the modified cellulose.

The cellulose material as used here refers to a material that mainly contains cellulose and that can be in various forms. Specific examples include pulp (e.g., grass plant-derived pulp, such as wood pulp, jute, Manila hemp, and kenaf); natural cellulose, such as cellulose produced by microorganisms; regenerated cellulose obtained by dissolving cellulose in a copper ammonia solution or a solvent, such as a morpholine derivative, and subjecting the dissolved cellulose to spinning; and fine cellulose obtained by subjecting the cellulose material to mechanical treatment, such as hydrolysis, alkali hydrolysis, enzymatic decomposition, blasting treatment, or vibration ball milling, to depolymerize the cellulose; and the like.

The method for defibrating the cellulose material can be any method that enables the cellulose material to remain in a fibrous form. Examples of the method include mechanical defibration treatment using, for example, a homogenizer or a grinder; chemical treatment using, for example, an oxidation catalyst; and biological treatment using, for example, microorganisms.

The cellulose nanofibers for use can be anionically modified cellulose nanofibers. Examples of anionically modified cellulose nanofibers include carboxylated cellulose nanofibers, carboxymethylated cellulose nanofibers, phosphorylated cellulose nanofibers, sulfonated cellulose nanofibers, and the like. The anionically modified cellulose nanofibers can be obtained, for example, by incorporating a functional group, such as a carboxyl group, a carboxymethyl group, a phosphate group, or a sulfonate group, into a cellulose material by a known method, washing the obtained modified cellulose to prepare a dispersion of the modified cellulose, and defibrating this dispersion.

The carboxylated cellulose can be obtained, for example, by oxidizing the cellulose material in water by using an oxidizing agent in the presence of a compound selected from the group consisting of an N-oxyl compound, bromide, iodide, and a mixture thereof.

The amount of the N-oxyl compound is not particularly limited as long as the amount is a catalytic amount that can disintegrate cellulose into nanofibers. The amount of bromide or iodide can be suitably selected within the range in which an oxidation reaction is promoted.

For the oxidizing agent, a known oxidizing agent may be used. Examples include halogen, hypohalous acid, halous acid, perhalogenic acid, salts thereof, halogen oxide, peroxide, and the like. It is preferable to set the conditions so that the amount of carboxyl groups in oxidized cellulose is 0.2 mmol/g or more based on the solids content mass of the oxidized cellulose. The amount of carboxyl groups can be adjusted, for example, by performing the following: adjustment of oxidation reaction time; adjustment of oxidation reaction temperature; adjustment of pH in oxidation reaction;

and adjustment of the amount of an N-oxyl compound, bromide, iodide, oxidizing agent, or the like.

Carboxymethyl groups can be introduced in the following manner.

The cellulose material and a solvent are mixed, and mercerization treatment is performed using 0.5-fold to 20-fold moles of alkali hydroxide metal per glucose residue of the cellulose material as a mercerization agent at a reaction temperature of 0 to 70°C for a reaction time of about 15 minutes to about 8 hours. Thereafter, 0.05-fold to 10.0-fold moles of a carboxymethylating agent per glucose residue are added thereto, and a reaction is performed at a reaction temperature of 30 to 90°C for a reaction time of 30 minutes to 10 hours, whereby carboxymethyl groups can be introduced into the hydroxyl groups of the cellulose molecule.

The degree of substitution of carboxymethyl per glucose unit in the modified cellulose obtained by introducing carboxymethyl groups into the cellulose material is preferably 0.02 to 0.50.

The thus-obtained anionically modified cellulose can be dispersed in an aqueous solvent to form a dispersion, and then the dispersion can be defibrated using a grinder. The grinder for use can be any of the following: a high-speed shearing grinder, a collider grinder, a bead mill grinder, a high-speed rotating grinder, a colloid mill grinder, a high-pressure grinder, a roll mill grinder, and an ultrasonic grinder. These grinders can also be used in a combination of two or more. Of these, a high-speed shearing defibrator, a collider defibrator, and a high-speed rotating defibrator are preferably used because higher shear force can be applied with less risk of contamination by media.

Further, cellulose nanofibers or cellulose nanocrystals obtained by neutralizing the anionically modified cellulose with a basic neutralizer can also be suitably used as the water-dispersible cellulose-based rheology control agent. Neutralization using such a neutralizer improves the anti-water adhesion of the water-dispersible cellulose-based rheology control agent. Examples of neutralizers for the anionically modified cellulose nanofibers include inorganic metal salt groups, such as sodium hydroxide, and organic bases, such as quaternary ammonium salts and amines (primary amine, secondary amine, and tertiary amine). In. view of, for example, water resistance of the obtained coating film, organic bases such as quaternary ammonium salts and amines (primary amine, secondary amine, and tertiary amine) are preferably used. A preferable quaternary ammonium salt is quaternary ammonium hydroxide. Examples of amines include alkylamines and alcoholamines. Examples of alkylamines include N-butylamine, N-octylamine, dibutylamine, triethylamine, and the like. Examples of alcoholamines include N-butyl ethanolamine, N-methyl ethanolamine, 2-amino-2-methyl-1-propanol, dimethylethanolamine, dibutylethanolamine, methyldiethanolamine, and the like.

The content of the neutralizer is not particularly limited as long as some or the entirety of the anionically modified cellulose can be neutralized. The content of the neutralizer is preferably 0.2 to 1.0 equivalent in terms of the neutralization equivalent based on the contained acid groups.

From the standpoint of obtaining a coating film with excellent brilliance, the content (solids content) of the water-dispersible hydroxy-containing acrylic resin (A) in the aqueous paint composition of the present invention is preferably within a range of 2 to 80 parts by mass, more preferably 10 to 60 parts by mass, and even more preferably 20 to 50 parts by mass, per 100 parts by mass of the resin solids content of the aqueous paint composition. From the standpoint of obtaining a coating film with excellent brilliance, the content of the flake-effect pigment (B) in the aqueous paint composition of the present invention is characterized by being 1 to 50 parts by mass, preferably 3 to 45 parts by mass, and more preferably 5 to 40 parts by mass, per 100 parts by mass of the resin solids content of the aqueous paint composition. In particular, the content of the flake-effect pigment (B) in the aqueous paint composition of the present invention is preferably 5 to 35 parts by mass, more preferably 5 to 30 parts by mass, and particularly preferably 10 to 28 parts by mass, per 100 parts by mass of the resin solids content of the aqueous paint composition. From the standpoint of obtaining a coating film with excellent brilliance, the content (solids content) of the water-dispersible cellulose-based rheology control agent (C) in the aqueous paint composition of the present invention is preferably within a range of 0.1 to 30 parts by mass, more preferably 0.5 to 20 parts by mass, and even more preferably 1 to 15 parts by mass, per 100 parts by mass of the resin solids content of the aqueous paint composition. Accordingly, in a preferred embodiment, the solids content of the water-dispersible hydroxy-containing acrylic resin (A), the content of the flake-effect pigment (B), and the water-dispersible cellulose-based rheology control agent (C) in the aqueous paint composition of the present invention are preferably in the following ranges, based on 100 parts by mass of the resin solids content of the aqueous paint composition:

water-dispersible hydroxy-containing acrylic resin (A): 2 to 80 parts by mass, preferably 10 to 60 parts by mass, and more preferably 20 to 50 parts by mass;
flake-effect pigment (B): 1 to 50 parts by mass, preferably 3 to 35 parts by mass, and more preferably 5 to 30 parts by mass; water-dispersible cellulose-based rheology control agent (C): 0.1 to 30 parts by mass, preferably 0.5 to 20 parts by mass, and more preferably 1 to 15 parts by mass.

Other components

Binder component other than the water-dispersible hydroxy-containing acrylic resin (A)

The binder component other than the water-dispersible hydroxy-containing acrylic resin (A) can be a known binder component that has been used in the field of paints and that contains a base resin and optionally a curing agent. Examples of the base resin include acrylic resins other than the water-dispersible hydroxy-containing acrylic resin (A), polyester resins, alkyd resins, polyurethane resins, and the like. Base resins that have crosslinkable functional groups, such as hydroxyl groups, carboxyl groups, or epoxy groups, are preferred.

In particular, the binder component other than the water-dispersible hydroxy-containing acrylic resin (A) preferably contains a combination of a hydroxy-containing resin as a base resin and a curing agent.

Hydroxy-containing resin

The hydroxy-containing resin is a resin having at least one hydroxyl group per molecule.

From the standpoint of, for example, water resistance of the obtained coating film, the hydroxy-containing resin (A1) preferably has a hydroxy value of 1 to 300 mg KOH/g, more preferably 5 to 250 mg KOH/g, and even more preferably 10 to 180 mg KOH/g.

The hydroxy-containing resin may also have one or more acid groups in the molecule. Examples of the acid group include carboxyl groups, sulfonic acid groups, phosphate groups, and the like. Carboxyl groups are particularly preferred.

The hydroxy-containing polyester resin can be made water-soluble or water-dispersible by neutralizing acid groups, preferably carboxyl groups, with a basic compound. Examples of the basic compound include hydroxides of alkali metals or alkaline earth metals, such as sodium hydroxide, potassium hydroxide, lithium hydroxide, calcium hydroxide, and barium hydroxide; ammonia; primary monoamines, such as ethylamine, propylamine, butylamine, benzylamine, monoethanolamine, neopentanolamine, 2-aminopropanol, 2-amino-2-methyl-1-propanol, and 3-aminopropanol; secondary monoamines, such as diethylamine, diethanolamine, di-n-propanolamine, di-iso-propanolamine, N-methylethanolamine, and N-ethylethanolamine; tertiary monoamines, such as dimethylethanolamine, trimethylamine, triethylamine, triisopropylamine, methyldiethanolamine, and 2-(dimethylamino)ethanol; and polyamines, such as diethylenetriamine, hydroxyethylaminoethylamine, ethylaminoethylamine, and methylaminopropylamine. The amount of such a basic compound can be usually about 0.1 to 1.5 equivalents, and preferably about 0.2 to 1.2 equivalents, relative to the acid groups of the hydroxy-containing polyester resin.

From the viewpoint of, for example, storage stability of the paint composition and water resistance of the obtained coating film, the hydroxy-containing resin generally has preferably an acid value in a range of 1 to 200 mg KOH/g, more preferably 2 to 150 mg KOH/g, and particularly preferably 3 to 90 mg KOH/g. When a hydroxy-containing resin having an acid value of 10 mg KOH/g or less is used as the hydroxy-containing resin, the hydroxy-containing resin can be used as an aqueous paint composition that is prepared by mixing with an emulsifier and stirring by applying a mechanical shear force to forcibly disperse the hydroxy-containing resin in water, in place of neutralizing the hydroxy-containing resin by using the basic compound.

Examples of the hydroxy-containing resin include polyester resins; acrylic resins other than the water-dispersible hydroxy-containing acrylic resin (A); polyether resins, polycarbonate resins, polyurethane resins, epoxy resins, alkyd resins, and the like. These resins can be used singly or in a combination of two or more. Among these, the hydroxy-containing resin preferably contains at least one resin selected from the group consisting of hydroxy-containing polyester resins and hydroxy-containing acrylic resins other than the water-dispersible hydroxy-containing acrylic resin (A).

Hydroxy-containing polyester resin

The aqueous paint composition of the present invention contains a hydroxy-containing polyester resin as the base resin and thereby enhances smoothness of the resulting coating film.

The hydroxy-containing polyester resin can usually be produced by an esterification or transesterification reaction of an acid component with an alcohol component.

The acid component may be a compound that is generally used as an acid component for producing a polyester resin. Examples of such acid components include aliphatic polybasic acids, alicyclic polybasic acids, aromatic polybasic acids, and the like.

The aliphatic polybasic acids generally refer to aliphatic compounds having at least two carboxyl groups per molecule, acid anhydrides of such aliphatic compounds, and esters of such aliphatic compounds. Examples of aliphatic polybasic acids include aliphatic polycarboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid, and butane tetracarboxylic acid; anhydrides of such aliphatic polycarboxylic acids; esters of such aliphatic polycarboxylic acids with lower alkyls having 1 to 6 carbon atoms, and preferably 1 to 4 carbon atoms; and the like. These aliphatic polybasic acids may be used singly or in a combination of two or more. From the standpoint of smoothness of the resulting coating film, adipic acid and/or adipic anhydride are particularly preferably used as aliphatic polybasic acids.

The alicyclic polybasic acids generally refer to compounds having at least one alicyclic structure and at least two carboxyl groups per molecule, acid anhydrides of such compounds, and esters of such compounds. The alicyclic structure can be mostly a 4- to 6-membered ring structure. Examples of alicyclic polybasic acids include alicyclic polycarboxylic acids, such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; anhydrides of such alicyclic polycarboxylic acids; and esters of such alicyclic polycarboxylic acids with lower alkyls having 1 to 6 carbon atoms, and preferably 1 to 4 carbon atoms. These alicyclic polybasic acids can be used singly or in a combination of two or more. From the standpoint of the smoothness of the resulting coating film, alicyclic polybasic acids that are preferably used are 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid, and 4-cyclohexene-1,2-dicarboxylic anhydride. Among these, 1,2-cyclohexanedicarboxylic acid and/or 1,2-cyclohexanedicarboxylic anhydride is more preferably used.

The aromatic polybasic acids generally refer to aromatic compounds having at least two carboxyl groups per molecule, acid anhydrides of such aromatic compounds, and esters of such aromatic compounds. Examples of aromatic polybasic acids include aromatic polycarboxylic acids, such as phthalic acid, isophthalic acid, terephthalic acid, naphthalenedicarboxylic acid, 4,4'-biphenyldicarboxylic acid, trimellitic acid, and pyromellitic acid; anhydrides of such aromatic polycarboxylic acids; esters of such aromatic polycarboxylic acids with lower alkyls having 1 to 6 carbon atoms, and preferably 1 to 4 carbon atoms; and the like. Such aromatic polybasic acids can be used singly or in a combination of two or more. The aromatic polybasic acids that are particularly preferably used are phthalic acid, phthalic anhydride, isophthalic acid, trimellitic acid, and trimellitic anhydride.

Acid components other than the aliphatic polybasic acids, alicyclic polybasic acids, and aromatic polybasic acids can also be used. Such other acid components are not particularly limited, and examples include fatty acids, such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids, such as lauric acid, myristic acid, palmitic acid, stearic acid, oleic acid, linoleic acid, linolenic acid, benzoic acid, p-tert-butyl benzoic acid, cyclohexanoic acid, and 10-phenyloctadecanoic acid; and hydroxycarboxylic acids, such as lactic acid, 3-hydroxybutanoic acid, and 3-hydroxy-4-ethoxybenzoic acid. Such acid components can be used singly or in a combination of two or more.

Polyhydric alcohols having at least two hydroxyl groups per molecule can be preferably used as the alcohol component. Examples of the polyhydric alcohols include dihydric alcohols, such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, a neopentyl glycol ester of hydroxypyvalic acid, hydrogenated bisphenol A, hydrogenated bisphenol F, and dimethylolpropionic acid; polylactone diols obtained by adding lactone compounds, such as ε-caprolactone, to such dihydric alcohols; ester diol compounds, such as bis(hydroxyethyl) terephthalate; polyether diol compounds, such as alkylene oxide adducts of bisphenol A, polyethylene glycols, polypropylene glycols, and polybutylene glycols; trihydric or higher polyhydric alcohols, such as glycerol, trimethylolethane, trimethylolpropane, diglycerol, triglycerol, 1,2,6-hexanetriol, pentaerythritol, dipentaerythritol, tris(2-hydroxyethyl)isocyanuric acid, sorbitol, and mannitol; and polylactone polyol compounds obtained by adding lactone compounds, such as ε-caprolactone, to such trihydric or higher polyhydric alcohols.

Alcohol components other than the polyhydric alcohols can also be used. Such other alcohol components are not particularly limited, and examples include monohydric alcohols, such as methanol, ethanol, propyl alcohol, butyl alcohol, stearyl alcohol, and 2-phenoxyethanol; alcohol compounds obtained by reacting monoepoxy compounds with acids, such as propylene oxide, butylene oxide, and Cardura E10 (product name; produced by Momentive Specialty Chemicals Inc.; glycidyl ester of a synthetic highly branched saturated fatty acid); and the like.

The method for producing the hydroxy-containing polyester resin is not particularly limited and can be performed by any usual method. For example, the acid component and the alcohol component can be heated in a nitrogen stream at about 150 to 250°C for about 5 to 10 hours to carry out an esterification reaction or transesterification reaction of the acid component with the alcohol component, thus providing a hydroxy-containing polyester resin.

For the esterification reaction or transesterification reaction, the acid component and the alcohol component can be added to a reaction vessel all at one time, or one or both of the components can be added in several portions.

Alternatively, for example, a hydroxy-containing polyester resin can be first synthesized and then reacted with an acid anhydride for half-esterification to obtain a polyester resin containing a carboxyl group and a hydroxyl group. Further alternatively, a carboxy-containing polyester resin can first be synthesized, and an alcohol component as mentioned above can be added to obtain a hydroxy-containing polyester resin.

As a catalyst for promoting the esterification or transesterification reaction, known catalysts are usable. Examples include dibutyltin oxide, antimony trioxide, zinc acetate, manganese acetate, cobalt acetate, calcium acetate, lead acetate, tetrabutyl titanate, tetraisopropyl titanate, and the like.

The hydroxy-containing polyester resin can be modified with a fatty acid, a monoepoxy compound, a polyisocyanate compound, or the like during or after the preparation of the resin.

Examples of the fatty acid include coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid, safflower oil fatty acid, and the like. Preferable examples of the monoepoxy compound include Cardura E10P (trade name; produced by Momentive Specialty Chemicals; glycidyl ester of a synthetic highly branched saturated fatty acid).

Examples of the polyisocyanate compound include aliphatic diisocyanate compounds, such as lysine diisocyanate, hexamethylene diisocyanate, and trimethylhexane diisocyanate; alicyclic diisocyanate compounds, such as hydrogenated xylylene diisocyanate, isophorone diisocyanate, methylcyclohexane-2,4-diisocyanate, methylcyclohexane-2,6-diisocyanate, 4,4'-methylene bis(cyclohexylisocyanate), and 1,3-(isocyanatomethyl)cyclohexane; aromatic diisocyanate compounds, such as tolylene diisocyanate, xylylene diisocyanate, and diphenylmethane diisocyanate; organic polyisocyanates, such as lysine triisocyanate and like tri- or higher polyisocyanates; adducts of such organic polyisocyanates with polyhydric alcohols, low-molecular-weight polyester resins, water, etc.; and cyclopolymers (e.g., isocyanurate), biuret adducts, etc. of such organic polyisocyanates. Such polyisocyanate compounds can be used singly or in a combination of two or more.

From the standpoint of excellent smoothness and water resistance of the resulting coating film, the hydroxy-containing polyester resin is preferably such that the content of the alicyclic polybasic acid in the starting acid components is preferably within a range of 20 to 100 mol%, more preferably 25 to 95 mol%, and even more preferably 30 to 90 mol%, based on the total amount of the acid components. It is particularly preferable from the standpoint of excellent smoothness of the resulting coating film that the alicyclic polybasic acid is 1,2-cyclohexanedicarboxylic acid and/or 1,2-cyclohexanedicarboxylic acid anhydride.

In one embodiment of the present invention, the hydroxy-containing polyester resin preferably has a hydroxy value of 1 to 200 mg KOH/g, more preferably 2 to 180 mg KOH/g, and even more preferably 5 to 170 mg KOH/g.

From the standpoint of excellent smoothness and water resistance of the resulting coating film, the hydroxy-containing polyester resin preferably has a number average molecular weight of 500 to 50,000, more preferably 1,000 to 30,000, and particularly preferably 1,200 to 10,000.

The hydroxy-containing polyester resin preferably has a carboxyl group. In this case, the hydroxy-containing polyester resin (A1-2) generally has preferably an acid value of 5 to 150 mg KOH/g, more preferably 10 to 100 mg KOH/g, and particularly preferably 15 to 80 mg KOH/g.

When the aqueous paint composition of the present invention contains the above hydroxy-containing polyester resin, the content of the hydroxy-containing polyester resin is preferably 2 to 80 parts by mass, more preferably 5 to 60 parts by mass, and even more preferably 10 to 50 parts by mass, based on 100 parts by mass of the resin solids in the aqueous paint composition.

Hydroxy-containing acrylic resin other than water-dispersible hydroxy-containing acrylic resin (A)

The hydroxy-containing acrylic resin other than water-dispersible hydroxy-containing acrylic resin (A) is usually prepared by copolymerizing the hydroxy-containing polymerizable unsaturated monomer (a) and another polymerizable unsaturated monomer (b) that can be copolymerized with the hydroxy-containing polymerizable unsaturated monomer (a) by a known method, such as a method of solution polymerization in an organic solvent.

Further, examples of the hydroxy-containing acrylic resin other than water-dispersible hydroxy-containing acrylic resin (A) can also include "urethane-modified polyester resins" in which polyisocyanate compounds are extended to a higher molecular weight by urethanization reactions with some of the hydroxyl groups in the resin.

The hydroxy-containing polymerizable unsaturated monomer (a) can generally be used in an amount of 1 to 50 mass%, preferably 2 to 40 mass%, and even more preferably 3 to 30 mass%, based on the total amount of the monomer (a) and the monomer (b).

From the standpoint of, for example, storage stability and water resistance of the obtained coating film, the hydroxy-containing resin other than the water-dispersible hydroxy-containing acrylic resin (A) preferably has a hydroxy value of 1 to 200 mg KOH/g, more preferably 2 to 150 mg KOH/g, and particularly preferably 5 to 100 mg KOH/g.

From the standpoint of, for example, water resistance of the obtained coating film, the hydroxy-containing resin other than the water-dispersible hydroxy-containing acrylic resin (A) generally has preferably an acid value in the range of 1 to 200 mg KOH/g, more preferably 2 to 150 mg KOH/g, and particularly preferably 5 to 80 mg KOH/g.

From the standpoint of, for example, storage stability and water resistance of the obtained coating film, the hydroxy-containing resin other than the water-dispersible hydroxy-containing acrylic resin (A) preferably has a weight average molecular weight in the range of 2,000 to 5,000,000, more preferably 4,000 to 1,000,000, and particularly preferably 8,000 to 500,000.

In the present specification, the number average molecular weight and the weight-average molecular weight are values calculated by converting the retention time (retention volume) measured using a gel permeation chromatograph (GPC) to the molecular weight of polystyrene, based on the retention time (retention volume) of a standard polystyrene with a known molecular weight measured under the same conditions. Specifically, using an HLC8120GPC (trade name; produced by Tosoh Corporation Co., Ltd.) as a gel permeation chromatography device and using four columns, i.e., a TSKgel G-4000HXL, TSKgel G-3000HXL, TSKgel G-2500HXL, and TSKgel G-2000HXL (trade names; all produced by Tosoh Corporation Co., Ltd.), measurements can be performed using a differential refractometer as the detector under conditions in which the mobile phase is tetrahydrofuran, the measurement temperature is 40°C, and the flow rate is 1 mL/min.

When the aqueous paint composition of the present invention contains a hydroxy-containing resin other than the water-dispersible hydroxy-containing acrylic resin (A), the content of the hydroxy-containing acrylic resin other than the water-dispersible hydroxy-containing acrylic resin (A) generally is preferably within a range of 2 to 80 parts by mass, more preferably 5 to 60 parts by mass, and even more preferably 10 to 50 parts by mass, per 100 parts by mass of the resin solids content of the aqueous paint composition.

From the standpoint of preventing occurrence of metallic unevenness in the formed coating film and improving the flip-flop property, the hydroxy-containing acrylic resin other than the water-dispersible hydroxy-containing acrylic resin (A) contains an acylic resin containing a hydroxyl group and a phosphate group.

The acylic resin containing a hydroxyl group and a phosphate group is usually prepared by copolymerizing monomer components, such as the hydroxy-containing polymerizable unsaturated monomer (a) and the phosphate-containing polymerizable unsaturated monomer (xvi) and optionally one or more other polymerizable unsaturated monomers by a known method, such as a method of solution polymerization in an organic solvent.

The proportions of the hydroxy-containing polymerizable unsaturated monomer (a) and the phosphate-containing polymerizable unsaturated monomer (xvi) and optionally one or more other polymerizable unsaturated monomers in the acrylic resin containing a hydroxyl group and a phosphate group are preferably in the following ranges, based on the total amount of these monomers.

The proportion of the hydroxy-containing polymerizable unsaturated monomer (a) is 1 to 50 mass%, preferably 5 to 40 mass%, and more preferably 10 to 30 mass%.

The proportion of the phosphate-containing polymerizable unsaturated monomer (xvi) is 1 to 70 mass%, preferably 10 to 55 mass%, and more preferably 20 to 45 mass%.

The proportion of one or more other polymerizable unsaturated monomers is 0 to 98 mass%, preferably 5 to 85 mass%, and more preferably 25 to 70 mass%.

The acrylic resin containing a hydroxyl group and a phosphate group preferably has a hydroxy value of 15 to 200 mg KOH/g, more preferably 20 to 140 mg KOH/g, and even more preferably 30 to 100 mg KOH/g.

The acrylic resin containing a hydroxyl group and a phosphate group generally has an acid value of preferably 10 to 200 mg KOH/g, more preferably 40 to 170 mg KOH/g, and particularly preferably 60 to 150 mg KOH/g.

The acrylic resin containing a hydroxyl group and a phosphate group generally has a number average molecular weight of preferably 2,000 to 100,000, more preferably 4,000 to 50,000, and particularly preferably 8,000 to 30,000.

When the aqueous paint composition of the present invention contains the acrylic resin containing a hydroxyl group and a phosphate group, the content of the acrylic resin containing a hydroxyl group and a phosphate group is generally within a range of preferably 0.1 to 20 parts by mass, more preferably 0.5 to 15 parts by mass, and even more preferably 1 to 10 parts by mass, per 100 parts by mass of the resin solids content of the aqueous paint composition.

Hydroxy-containing polyurethane resin

When the aqueous paint composition of the present invention contains a hydroxy-containing polyurethane resin, the obtained paint film can have enhanced chipping resistance.

Examples of the hydroxy-containing polyurethane resin include a resin produced by a process comprising reacting one or more aliphatic and/or alicyclic diisocyanates; at least one diol selected from the group consisting of polyetherdiols, polyesterdiols, and polycarbonate diols; a low-molecular-weight polyhydroxy compound; and dimethanol alkanoic acid to prepare a urethane prepolymer; neutralizing the urethane prepolymer with a tertiary amine, emulsifying and dispersing the neutralized urethane prepolymer in water, and, if necessary, further mixing the resulting emulsion with an aqueous medium containing a chain extender, such as a polyamine, a crosslinking agent, and/or a terminator, to perform a reaction until substantially no isocyanate groups remain.

The above method can usually yield, for example, a water-dispersible hydroxy-containing polyurethane resin with an average particle size of about 0.001 to 3 μm.

When the aqueous paint composition of the present invention contains the hydroxy-containing polyurethane resin, the content of the hydroxy-containing polyurethane resin is preferably within a range of 2 to 80 parts by mass, more preferably 5 to 60 parts by mass, and even more preferably 10 to 50 parts by mass, per 100 parts by mass of the resin solids content of the aqueous paint composition.

Curing agent

The curing agent is a functional group-containing compound that is capable of reacting with a crosslinkable functional group, such as a hydroxyl group that is present in the hydroxy-containing resin, or a carboxyl group or epoxy group that optionally is present, so as to cure the aqueous paint composition of the present invention. In the present specification, the curing agent is included in the resin solids content of the aqueous paint.

Examples of the curing agent include amino resins, polyisocyanate compounds, blocked polyisocyanate compounds, epoxy-containing compounds, carboxy-containing compounds, carbodiimide-containing compounds, and the like. These can be used singly or in a combination of two or more. Among these, amino resins, polyisocyanate compounds, and blocked polyisocyanate compounds that can react with hydroxyl groups are preferable from the standpoint of, for example, brilliance, water resistance, chipping resistance of the obtained coating film. Amino resins are particularly preferable from the standpoint of storage stability of the obtained paint.

Examples of amino resins that can be used include partially methylolated amino resins or completely methylolated amino resins obtained by reacting an amino component and an aldehyde component. Examples of the amino component include melamine, urea, benzoguanamine, acetoguanamine, steroganamin, spiroganamin, dicyandiamide, and the like. Examples of the aldehyde component include formaldehyde, paraformaldehyde, acetaldehyde, benzaldehyde, and the like.

Other examples of usable amino resins are compounds obtained by partially or completely etherifying a methylol group of the methylolated amino resin with an appropriate alcohol. Examples of the alcohol used for the etherification include methyl alcohol, ethyl alcohol, n-propyl alcohol, isopropyl alcohol, n-butyl alcohol, isobutyl alcohol, 2-ethyl-1-butanol, 2-ethyl-1-hexanol, and the like.

Amino resins are preferably melamine resins. Particularly preferred examples include methyl etherified melamine resins obtained by partially or completely etherifying a methylol group of a partially or completely methylolated melamine resin with methyl alcohol, butyl etherified melamine resins obtained by partially or completely etherifying a methylol group of a partially or completely methylolated melamine resin with butyl alcohol, and methyl-butyl mixed etherified melamine resins obtained by partially or completely etherifying a methylol group of a partially or completely methylolated melamine resin with methyl alcohol and butyl alcohol. Methyl-butyl mixed etherified melamine resins are more preferred.

Among these, from the standpoint of obtaining a coating film with excellent water resistance etc., it is particularly preferable to use a paint composition in which a hydroxy-containing polyester resin, which is produced by using acid components in which the total content of the aliphatic polybasic acid and the alicyclic polybasic acid in the acid components as a raw material is within a range of 30 to 97 mol% and the aromatic polybasic acid content is within a range of 3 to 70 mol%, based on the total amount of the acid components, is used as the hydroxy-containing resin, and at least one alkyl etherified melamine resin selected from the group consisting of the above methyl etherified melamine resin, butyl etherified melamine resin, and methyl-butyl mixed etherified melamine resin, is used as a curing agent.

The melamine resin generally has preferably a weight average molecular weight within a range of 400 to 6,000, more preferably 700 to 4,000, and particularly preferably 1,000 to 3,000.

The melamine resin can be a commercially available product. Examples include Cymel 202, Cymel 203, Cymel 204, Cymel 211, Cymel 238, Cymel 250, Cymel 251, Cymel 303, Cymel 323, Cymel 324, Cymel 325, Cymel 327, Cymel 350, Cymel 385, Cymel 1156, Cymel 1158, Cymel 1116, Cymel 1130 (all manufactured by Allnex Japan Inc.; trade name), Urban 120, Urban 20HS, Urban 20SE60, Urban 2021, Urban 2028, Urban 28-60 (trade names; all produced by Mitsui Chemicals, Inc.), and the like.

When the melamine resin is used as a curing agent, the following compounds can be used as catalysts: sulfonic acids, such as paratoluenesulfonic acid, dodecylbenzene sulfonic acid, and dinonylnaphthalenesulfonic acid; alkyl phosphate, such as monobutyl phosphoric acid, dibutyl phosphoric acid, mono-2-ethylhexyl phosphoric acid, and di-2-ethylhexyl phosphoric acid; and salts of these acids and amines.

The polyisocyanate compound is a compound having at least two isocyanate groups per molecule. Examples include aliphatic polyisocyanates, alicyclic polyisocyanates, araliphatic polyisocyanates, aromatic polyisocyanates, derivatives of these polyisocyanates, and the like.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane; and the like.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or a mixture thereof, and norbornane diisocyanate; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane; and the like.

Examples of the araliphatic polyisocyanates include araliphatic diisocyanates, such as 1,3- or 1,4-xylylene diisocyanate or a mixture thereof, ω,ω'-diisocyanato-1,4-diethylbenzene, and 1,3- or 1,4-bis(1-isocyanato-1-methylethyl)benzene (common name: tetramethylxylylene diisocyanate) or a mixture thereof; araliphatic triisocyanates, such as 1,3,5-triisocyanatomethylbenzene; and the like.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylene diisocyanate or a mixture thereof, 4,4'-toluidine diisocyanate, and 4,4'-diphenyl ether diisocyanate; aromatic triisocyanates, such as triphenylmethane-4,4',4"-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate; and the like.

Examples of the derivatives of polyisocyanates include a dimer, a trimer, biuret, allophanate, uretdione, urethoimine, isocyanurate, oxadiazinetrione, polymethylene polyphenyl polyisocyanate (crude MDI; polymeric MDI), and crude TDI, of the polyisocyanate compounds.

The polyisocyanates and derivatives thereof can be used singly or in a combination of two or more. Among these polyisocyanates, aliphatic diisocyanates, alicyclic diisocyanates, and derivatives thereof are preferably used singly or in a combination of two or more.

As the polyisocyanate compound, prepolymers, which are obtained by subjecting polyisocyanates and derivatives thereof, such as those mentioned above, and a polyhydric alcohol, a low molecular weight polyester resin or water to a urethane reaction under the conditions in which isocyanate groups are in excess, can also be used.

From the viewpoint of water resistance of the obtained coating film, it is usually preferable that the polyisocyanate compound is used at a ratio in which the equivalent ratio (NCO/OH) of the isocyanate groups in the polyisocyanate compound to the hydroxyl groups in the hydroxy-containing resin is within a range of 0.5 to 2.0, and particularly preferably within a range of 0.8 to 1.5.

The blocked polyisocyanate compound is a compound in which isocyanate groups of the polyisocyanate compound are blocked with a blocking agent.

Examples of the blocking agent include phenol-based blocking agents, such as phenol, cresol, xylenol, nitrophenol, ethyl phenol, hydroxydiphenyl, butylphenol, isopropyl phenol, nonylphenol, octylphenol, and methyl hydroxybenzoate; lactam-based blocking agents, such as ε-caprolactam, δ-valerolactam, γ-butyrolactam, and β-propiolactam; aliphatic alcohol-based blocking agents, such as methanol, ethanol, propyl alcohol, butyl alcohol, amyl alcohol, and lauryl alcohol; ether-based blocking agents, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based blocking agents, such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based blocking agents, such as formamide oxime, acetamide oxime, acetoxime, methyl ethyl ketoxime, diacetyl monooxime, benzophenone oxime, and cyclohexane oxime; active methylene-based blocking agents, such as dimethyl malonate, diethyl malonate, ethyl acetoacetate, methyl acetoacetate, and acetylacetone; mercaptan-based blocking agents, such as butyl mercaptan, tert-butyl mercaptan, hexyl mercaptan, tert-dodecyl mercaptan, 2-mercaptobenzothiazole, thiophenol, methylthiophenol, and ethyl thiophenol; acid amide-based blocking agents, such as acetanilide, acetanisidide, acetotoluide, acrylamide, methacrylamide, acetamide, stearic acid amide, and benzamide; imide-based blocking agents, such as succinimide, phthalic imide, and maleic imide; amine-based blocking agents, such as diphenylamine, phenylnaphthylamine, xylidine, N-phenylxylidine, carbazole, aniline, naphthylamine, butylamine, dibutylamine, and butylphenylamine; imidazole-based blocking agents, such as imidazole and 2-ethylimidazole; urea-based blocking agents, such as urea, thiourea, ethylene urea, ethylene thiourea, and diphenyl urea; carbamate-based blocking agents, such as phenyl N-phenylcarbamate; imine-based blocking agents, such as ethyleneimine and propylene imine; sulfite-based blocking agents, such as sodium bisulfite and potassium bisulfite; azole compounds; and the like. Examples of the azole compounds include pyrazoles or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazoles or imidazole derivatives, such as imidazole, benzimidazole, 2-methylimidazole, 2-ethylimidazole, and 2-phenylimidazole; imidazoline derivatives, such as 2-methylimidazoline and 2-phenylimidazoline; and the like.

Among these, oxime-based blocking agents, active methylene-based blocking agents, and pyrazoles or pyrazole derivatives are preferred as the blocking agent.

As the blocking agent, hydroxycarboxylic acids having one or more hydroxyl groups and one or more carboxyl groups, such as hydroxypivalic acid and dimethylolpropionic acid, can also be used.

Further, a blocked polyisocyanate compound having water dispersibility imparted by blocking the isocyanate groups using the hydroxycarboxylic acid and then neutralizing the carboxyl group of the hydroxycarboxylic acid can be preferably used.

When the hydroxy-containing resin and/or other base resins has a crosslinkable functional group such as a carboxyl group or an epoxy group, a curing agent having a crosslinkable functional group capable of reacting with the functional group can be used as the curing agent.

Examples of the curing agent include epoxy-containing compounds, carboxy-containing compounds, and carbodiimide group-containing compounds that can react with a crosslinkable functional group, such as those mentioned above. Among these, polycarbodiimide compounds that can react with a carboxyl group are preferred.

Polycarbodiimide compounds are compounds that have at least two carbodiimide groups per molecule. For example, a compound obtained by subjecting isocyanate groups of isocyanate group-containing compounds to a decarbonization reaction can be used.

From the standpoint of, for example, the smoothness of the obtained coating film, the polycarbodiimide compound is preferably a water-soluble or water-dispersible polycarbodiimide compound. The water-soluble or water-dispersible polycarbodiimide compound can be used without particular limitation as long as it is a polycarbodiimide compound that can be stably dissolved or dispersed in an aqueous medium.

Specific examples of the water-soluble polycarbodiimide compound include commercially available products such as Carbodilite SV-02, Carbodilite V-02, Carbodilite V-02-L2, and Carbodilite V-04 (trade names; all produced by Nisshinbo Holdings Inc.). Examples of the water-dispersible polycarbodiimide compound include commercially available products such as Carbodilite E-01 and Carbodilite E-02 (trade names; both produced by Nisshinbo Holdings Inc.).

Such polycarbodiimide compounds can be used singly or in a combination of two or more.

When the aqueous paint composition of the present invention contains the curing agent, the content of the curing agent is preferably 5 to 70 parts by mass, more preferably 10 to 50 parts by mass, and even more preferably 20 to 40 parts by mass, based on 100 parts by mass of the resin solids content of the aqueous paint composition.

Hydrophobic solvent

The aqueous paint composition of the present invention preferably further contains a hydrophobic solvent from the viewpoint of improving the smoothness of the obtained coating film.

The hydrophobic solvent is preferably an organic solvent that dissolves in 100 g of water at 20°C in an amount of preferably 10 g or less, more preferably 5 g or less, and still more preferably 1 g or less in terms of mass. Examples of such organic solvents include hydrocarbon solvents, such as rubber volatile oils, mineral spirit, toluene, xylene, and solvent naphtha; alcohol-based solvents, such as 1-hexanol, 1-octanol, 2-octanol, 2-ethyl-1-hexanol, 1-decanol, benzyl alcohol, ethylene glycol mono-2-ethylhexyl ether, propylene glycol mono-*n*-butyl ether, dipropylene glycol mono-*n*-butyl ether, tripropylene glycol mono-*n*-butyl ether, propylene glycol mono-2-ethylhexyl ether, and propylene glycol monophenyl ether; ester solvents, such as *n*-butyl acetate, isobutyl acetate, isoamyl acetate, methyl amyl acetate, and ethylene glycol monobutyl ether acetate; and ketone solvents, such as methyl isobutyl ketone, cyclohexanone, ethyl *n*-amyl ketone, and diisobutyl ketone. These solvents can be used singly or in a combination of two or more.

The alcohol-based hydrophobic solvent is preferably used as the hydrophobic solvent from the viewpoint of the smoothness of the obtained coating film. Particularly preferable is an alcohol-based hydrophobic solvent having 7 to 14 carbon atoms. At least one alcohol-based hydrophobic solvent selected from the group consisting of 1-octanol, 2-octanol, 2-ethyl-1-hexanol, ethylene glycol mono-2-ethylhexyl ether, propylene glycol mono-*n*-butyl ether, and dipropylene glycol mono-*n*-butyl ether is more preferred.

When the aqueous paint composition of the present invention contains a hydrophobic solvent, the content of the hydrophobic solvent generally is preferably within a range of 10 to 100 parts by mass, more preferably 20 to 90 parts by mass, and particularly preferably 30 to 80 parts by mass, based on 100 parts by mass of the resin solids content of the aqueous paint composition.

Other components

The aqueous paint composition of the present invention may contain, as necessary, common additives for paints, such as color pigments, extender pigments, thickeners, curing catalysts, ultraviolet absorbers, light stabilizers, defoamers, plasticizers, organic solvents, surface adjusting agents, and anti-settling agents. Such additives can be used singly or in a combination of two or more.

Examples of color pigments include titanium oxide, zinc white, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments, and the like.

Examples of extender pigments include talc, clay, kaolin, barium sulfate, barium carbonate, calcium carbonate, and the like.

Examples of thickeners include inorganic thickeners, such as silicate, metal silicate, montmorillonite, and colloidal alumina; polyacrylic acid-based thickeners, such as copolymers of (meth)acrylic acid and (meth)acrylic acid esters, and sodium polyacrylate; associative thickeners having a hydrophilic moiety and a hydrophobic moiety in one molecule and effectively showing a thickening effect effectively because in an aqueous medium, the hydrophobic moiety is adsorbed on the surface of a pigment or emulsion particles of a paint or hydrophobic moieties are associated with each other; protein-based thickeners, such as casein, sodium caseinate, and ammonium caseinate; alginate-based thickeners, such as sodium alginate; polyvinyl-based thickeners, such as polyvinyl alcohol, polyvinyl pyrrolidone, and polyvinyl benzyl ether copolymers; polyether-based thickeners, such as Pluronic (registered trademark) polyether, polyether dialkyl ester, polyether dialkyl ether, and polyether epoxy-modified products; maleic anhydride copolymer thickeners, such as partial esters of vinyl methyl ether-maleic anhydride copolymers; polyamide-based thickeners, such as polyamide amine salts; and the like.

Such thickening agents can be used singly or in a combination of two or more.

As the thickeners, polyacrylic acid-based thickeners and/or the associative thickeners are particularly preferred.

Examples of curing catalysts include organometallic compounds, acid compounds, base compounds, and the like.

Examples of organometallic compounds include metal catalysts, such as tetraisopropyl titanate, tetrabutyl titanate, lithium acetate, iron (III) acetylacetone, zinc 2-ethylhexanoate, copper acetate, vanadium trichloride, tin octylate, dibutyltin diacetate, dibutyltin dioctoate, dibutyltin dilaurate, dibutyltin dimaleate, tetrabutyltin, dibutyltin oxide, tetra-n-butyl-1,3-diacetyloxydistannoxane, tetra-n-propyl-1,3-diacetyloxydistannoxane, and tetra-n-butyl-1,3-dilauryloxydistannoxane. Organotin compounds, such as tin octylate, dibutyltin diacetate, dibutyltin dilaurate, and distanoxanes, are particularly preferred. Further, when low-temperature baking is required, dibutyltin diacetate is preferably used.

Examples of acid compounds include paratoluenesulfonic acid, dodecylbenzene sulfonic acid, dinonylnaphthalenesulfonic acid, dinonylnaphthalenedisulfonic acid, butyl phosphoric acid, octyl phosphoric acid, and the like. Amine neutralized products of these acids are also preferably used.

Examples of base compounds include compounds such as trimethylamine, triethylamine, dimethylcyclohexylamine, N-tetramethylhexane-1,6-diamine, N-pentamethyldiethylenetriamine, and 2-methyl-1,4-diazabicyclo[2,2,2]octane.

Examples of ultraviolet absorbers include benzotriazole-based absorbers, triazine-based absorbers, salicylic acid derivative-based absorbers, benzophenone-based absorbers, and the like.

Examples of light stabilizers include hindered amine-based light stabilizers.

Method for producing aqueous paint composition

The aqueous paint composition of the present invention can be prepared by mixing the various components described above in a solvent by a usual paint-forming method.

The solids content of the aqueous paint composition of the present invention is more than 10 mass% and 35 mass% or less. In particular, the solids content is preferably in the range of 15 to 33 mass%, and more preferably 20 to 30 mass%.

In the present specification, the term "aqueous paint" is a term contrasted with organic solvent-based paint, and generally means a paint in which coating film-forming resin components, pigments, and the like are dispersed and/or dissolved in water or a medium (aqueous medium) containing water as a main component. The aqueous paint composition of the present invention preferably has a water content within a range of 10 to 90 mass%, more preferably 20 to 80 mass%, and more preferably 30 to 70 mass%.

Coated article

The coated article of the present invention is characterized by having, on a substrate, a cured coating film formed by curing the aqueous paint composition of the present invention. In this embodiment, the coated article of the present invention comprises a substrate and a cured coating film on the substrate, the cured coating film being formed by curing the aqueous paint composition of the present invention.

The cured coating film can be obtained by forming a wet coating film (uncured coating film) by applying the aqueous paint composition of the present invention to a substrate, and then curing the wet coating film.

Examples of the substrate include exterior panel parts of vehicle bodies, such as passenger cars, trucks, motorcycles, and buses; vehicle components; exterior panel parts of household electric appliances, such as mobile phones and audio equipment; and the like. Among these, exterior panel parts of vehicle bodies and vehicle components are preferable.

The material for such substrates is not particularly limited. Examples of the material include metal materials, such as iron, aluminum, brass, copper, tin, stainless steel, galvanized steel, and steel plated with zinc alloys (e.g., Zn-Al, Zn-Ni, Zn-Fe); plastic materials, for example, resins, such as polyethylene resins, polypropylene resins, acrylonitrile-butadiene-styrene (ABS) resins, polyamide resins, acrylic resins, vinylidene chloride resins, polycarbonate resins, polyurethane resins, and epoxy resins, and various types of fiber-reinforced plastics (FRP); inorganic materials, such as glass, cement, and concrete; wood; textile materials, such as paper and cloth; and the like. Among these materials, metal materials and plastic materials are preferable.

Examples of the substrates further include the above metal materials or vehicle bodies etc. formed of such metal materials, the metal surface of which has been subjected to a surface treatment such as phosphate treatment, chromate treatment, and composite oxide treatment. Examples of the substrates further include those on the metal surface of which an undercoating film of various electrodeposition paints has been formed, and those on the metal surface of which an undercoating film of various electrodeposition paints has been formed, and those on the metal surface of which an undercoating film of various electrodeposition paints has been formed and an intermediate coating film has been further formed on the undercoating film.

The method for applying the aqueous paint composition of the present invention is not particularly limited, and examples include air spray coating, airless spray coating, rotary atomization coating, curtain coating, and the like. A wet coating film can be formed by these coating methods. Among these methods, air spray coating, rotary atomization coating, and the like are preferred. If necessary, an electrostatic charge can be applied during coating.

The coating amount of the aqueous paint composition of the present invention generally is preferably about 0.5 to 50 $\mu$m, more preferably about 2 to 40 $\mu$m, even more preferably about. 5 to 30 $\mu$m, and particularly preferably about 8 to 18 $\mu$m, in terms of cured film thickness.

The curing of the wet coating film can be performed by heating the aqueous paint composition of the present invention after the aqueous paint composition is applied to a substrate. The heating can be performed by a common heating means. For example, a drying furnace, such as a hot air furnace, an electric furnace, or an infrared induction heating furnace, can be used. The heating temperature is preferably about 60 to 180°C, more preferably about 90 to about 170°C, and even more preferably about 110 to 160°C. The heating time is not particularly limited and is preferably about 10 to 60 minutes, and more preferably about 20 to 40 minutes.

In order to prevent coating film defects, such as popping, before heat-curing the applied aqueous paint composition of the present invention, it is preferable to perform preheating, air blowing, etc. under heating conditions in which the coating film does not substantially cure. The preheating temperature is preferably about 40 to 100°C, more preferably about 50 to 90°C, even more preferably about 60 to 80°C. The preheating time is preferably about 30 seconds to about 15 minutes, more preferably about 1 to 10 minutes, and still more preferably about 2 to 5 minutes. The air blow can be usually performed by blowing air that is heated to room temperature or about 25 to 80°C to a coated surface of a substrate for about 30 seconds to about 15 minutes.

Method for forming multilayer coating film

When a multilayer coating film comprising a base coating film and a clear coating film is formed on a substrate by a 2-coat 1-bake method, the aqueous paint composition of the present invention can be used for forming the base coating film. The method for forming the coating film in this case can be performed in accordance with the following method I.

Method I

The method for forming the multilayer coating film includes:

(1) a step of applying the aqueous paint composition of the present invention to a substrate to form an uncured base coating film;

(2) a step of applying a clear coat paint composition (Y) to the uncured base coating film to form an uncured clear coating film; and

(3) a step of heating the uncured base coating film and the uncured clear coating film to simultaneously cure the two coating films.

The substrate to be coated in method I is preferably a vehicle body of an automobile on which an undercoating film and/or an intermediate coating film is formed. The undercoating film is preferably formed by using an electrodeposition paint, and more preferably using a cationic electrodeposition paint. The uncured coating film includes a coating film in a set-to-touch condition and a coating film in a dry-to-touch condition.

When the aqueous paint composition of the present invention is applied by a 2-coat 1-bake method in method I, the coating film thickness is about 0.5 to 50 $\mu$m, preferably about 2 to 40 $\mu$m, more preferably about 5 to 30 $\mu$m, and still more preferably about 8 to 18 $\mu$m, in terms of the cured film thickness.

The uncured base coating film is usually formed by using one kind of base coat paint composition, but can also be formed by using two or more kinds of base coat paint compositions. In that case, the aqueous paint composition of the present invention may be used as a base coat paint composition for forming at least the uppermost layer of the base coating film.

When two or more kinds of base paint compositions are used, two kinds of base coat paint compositions are preferably used.

Specifically, for example, after a first base coat paint, for which the aqueous paint composition of the present invention can be used, is applied to a substrate to form a first, base coating film, a second base coat paint using the paint composition of the present invention is applied to the first base coating film to form a second base coating film.

In this case, from the viewpoint of the flip-flop property of the formed coating film, the first base coating film preferably has a thickness of 5 to 15 $\mu$m, more preferably 7 to 13 $\mu$m, in terms of the cured film thickness, and the second base coating film preferably has a thickness of 0.5 to 8 $\mu$m, more preferably 1 to 8 $\mu$m, and even more preferably 2 to 6 $\mu$m, in terms of the cured film thickness.

The coating film thickness of the clear coat paint composition (Y) is preferably about 10 to 80 $\mu$m, and more preferably about 15 to 60 $\mu$m, in terms of the cured film thickness.

In method I, in order to prevent the occurrence of coating film defects, such as popping, after application of the aqueous paint composition of the present invention, it is preferable to perform preheating, air blowing, etc. under heating conditions in which the coating film does not substantially cure. The preheating temperature is preferably about 40 to 100°C, more preferably about 50 to 90°C, even more preferably about 60 to 80°C. The preheating time is preferably about 30 seconds to about 15 minutes, more preferably about 1 to 10 minutes, and still more preferably about 2 to 5 minutes. The air blowing can be usually performed by blowing air that is heated to room temperature or about 25 to 80°C to a coated surface of the substrate for about 30 seconds to about 15 minutes. After the clear coat paint composition (Y) is applied, if necessary, an interval of about 1 to 60 minutes at room temperature can be set, or preheating can be performed at about 40 to 80°C for about 1 to 60 minutes.

The curing of the coating film can be performed by a known heating means, such as those described above. The heating temperature is preferably about 60°C to 180°C, more preferably about 90 to 170°C, and still more preferably about 110 to 160°C. The heating time is preferably about 10 to 60 minutes, and more preferably about 20 to 40 minutes. The heating can simultaneously cure both the base coating film and the clear coating film.

When a multilayer coating film comprising an intermediate coating film, a base coating film, and a clear coating film is formed on a substrate, such as a vehicle body of an automobile, by a 3-coat 1-bake method, the aqueous paint composition of the present invention may be suitably used for forming the base coat. The method for forming a coating film in this case can be performed in accordance with the following method II.

Method II

The method for forming the multilayer coating film includes:

(1) a step of applying an intermediate paint composition to a substrate to form an uncured intermediate coating film;

(2) a step of applying the aqueous paint composition of the present invention to the uncured intermediate coating film to form an uncured base coating film;

(3) a step of applying a clear coat paint composition (Y) to the uncured base coating film to form an uncured clear coating film; and

(4) a step of heating the uncured intermediate coating film, the uncured base coating film, and the uncured clear coating film to simultaneously cure the coating films.

Method II is a method comprising performing a coating film formation method according to method I on an uncured intermediate coating film. The substrate to be coated in method II is preferably a vehicle body of an automobile or the like on which an undercoat coating film is formed. The undercoating film is preferably formed of an electrodeposition paint composition, and more preferably formed of a cationic electrodeposition paint composition.

In method II, the coating film thickness of the intermediate paint composition usually is preferably about 10 to 60 $\mu$m, and more preferably about 20 to 40 $\mu$m, in terms of the cured film thickness. The coating film thickness of the aqueous paint composition of the present invention is about 0.5 to 50 $\mu$m, preferably about 2 to 40 $\mu$m, more preferably about 5 to 30 $\mu$m, and still more preferably about 8 to 18 $\mu$m, in terms of the cured film thickness. The coating film thickness of the clear coat paint composition (Y) is preferably about 10 to 80 $\mu$m, and more preferably about 15 to 60 $\mu$m, in terms of the cured film thickness.

In method II, when the aqueous paint composition of the present invention is used as the intermediate paint composition, preheating is preferably performed after the application of the paint composition. The preheating temperature is preferably about room temperature to about 100°C, more preferably about 40 to 90°C, and still more preferably about 60 to 80°C. The preheating time is preferably about 30 seconds to about 15 minutes, more preferably about 1 to 10 minutes, and still more preferably about 2 to 5 minutes.

After the application of the aqueous paint composition of the present invention, preheating is preferably performed. The preheating temperature is preferably about room temperature to about 100°C, more preferably about 40 to 90°C, and still more preferably about 60 to 80°C. The preheating time is preferably about 30 seconds to about 15 minutes, more preferably about 1 to 10 minutes, and still more preferably about 2 to 5 minutes.

Also in method II, the uncured base coating film is usually formed by using one kind of base coat paint composition, but can also be formed by using two or more kinds of base paint compositions. In that case, the aqueous paint composition of the present invention can be used as a base coat paint composition for forming at least the uppermost layer of the base coating film.

When two or more kinds of base coat paint compositions are used, two kinds of base coat paint compositions are preferably used.

After the application of the clear coat paint composition (Y), if necessary, an interval of about 1 minute to about 60 minutes at room temperature can be set, or preheating can be performed at about 40 to 80°C for about 1 to 60 minutes.

The curing of a three-layered coating film composed of the uncured intermediate coating film, the uncured base coating film, and the uncured clear coating film can be performed by a known heating means as described above. The heating temperature is preferably about 60 to 180°C, more preferably about 90 to 170°C, and still more preferably about 110 to 160°C. The heating time is preferably about 10 to 60 minutes, and more preferably about 20 to 40 minutes. The heating can simultaneously cure the three-layered coating film composed of the intermediate coating film, the base coating film, and the clear coating film.

As the clear coat paint composition (Y) used in methods I and II, any known thermosetting clear coat paint composition used for coating a vehicle body of an automobile etc. can be used. Examples include base resins having crosslinkable functional groups, organic solvent-based thermosetting paint compositions containing a crosslinking agent, aqueous thermosetting paint compositions containing a crosslinking agent, powder thermosetting paint compositions containing a crosslinking agent, and the like.

Examples of crosslinkable functional groups contained in the base resins include carboxyl groups, hydroxyl groups, epoxy groups, silanol groups, and the like. Examples of the base resins include acrylic resins, polyester resins, alkyd resins, urethane resins, epoxy resins, fluororesins, and the like. Examples of crosslinking agents include polyisocyanate compounds, blocked polyisocyanate compounds, melamine resins, urea resins, carboxy-containing compounds, carboxy-containing resins, epoxy-containing resins, epoxy-containing compounds, and the like.

The clear coat paint can be a one-pack paint or can be a multi-component paint, such as a two-component urethane resin paint.

If necessary, the clear coat paint composition (Y) can contain a color pigment, a brilliant pigment, a dye, and the like as long as transparency is not impaired, and can further contain an extender pigment, an ultraviolet absorber, a light stabilizer, a defoamer, a thickener, a rust inhibitor, a surface adjusting agent, and the like, as appropriate.

The combination of the base resin and the crosslinking agent in the clear coat paint composition (Y) is preferably a combination of carboxy-containing resin and epoxy-containing resin, a combination of hydroxy-containing resin and polyisocyanate compound, a combination of hydroxy-containing resin and blocked polyisocyanate compound, a combination of hydroxy-containing resin and melamine resin, or the like. Among these, the combination of hydroxy-containing resin/polyisocyanate compound is preferred from the viewpoint of graininess of the formed coating film.

The intermediate paint composition used in method II can be any known thermosetting intermediate paint composition. For example, a thermosetting paint composition containing a base resin containing a crosslinkable functional group, a crosslinking agent, a color pigment, and an extender pigment can be preferably used.

Examples of crosslinkable functional groups contained in the base resin include carboxyl groups, hydroxyl groups, epoxy groups, and the like. Examples of base resins include acrylic resins, polyester resins, alkyd resins, urethane resins, and the like. Examples of crosslinking agents include melamine resins, polyisocyanate compounds, blocked polyisocyanate compounds, and the like.

The intermediate paint composition can be any composition selected from organic solvent-based paint compositions, aqueous paint compositions, and powder paint compositions. Among these paint compositions, aqueous paint compositions are preferably used.

In the above methods I and II, the coating can be applied by a known method, such as air spray coating, airless spray coating, or rotary atomization coating.

Examples

The present invention is described below in more detail with reference to the following Examples. However, the present invention is not limited to these Examples. Note that "parts" and "%" are expressed on a mass basis unless otherwise specified.

Production of Water-Dispersible Hydroxy-Containing Acrylic Resin (A)

Production Example 1

128.0 parts of deionized water and 2.0 parts of Adeka Reasoap SR-1025 (trade name, produced by Adeka, emulsifier, active ingredient: 25%) were placed in a reaction vessel equipped with a thermometer, a thermostat, a stirrer, a reflux condenser, a nitrogen inlet tube, and a dropping funnel. The mixture was stirred and mixed in a nitrogen flow and heated to 80°C.

Subsequently, 1% of the entire amount of a monomer emulsion for the core portion, which is described below, and 5.3 parts of a 6% ammonium persulfate aqueous solution were introduced into the reaction vessel and maintained at 80°C for 15 minutes. Thereafter, the remaining monomer emulsion for the core portion was added dropwise over a period of 3 hours to the reaction vessel maintained at the same temperature. After completion of the dropwise addition, the mixture was aged for 1 hour. A monomer emulsion for the shell portion, which is described below, was then added dropwise over a period of 1 hour, followed by aging for 1 hour. Thereafter, the mixture was cooled to 30°C while gradually adding 40.0 parts of a 5% 2-(dimethylamino)ethanol aqueous solution to the reaction vessel and filtered through a 100-mesh nylon cloth, thereby obtaining a water-dispersible hydroxy-containing acrylic resin (A-1) dispersion having an average particle size of 100 nm and solids content of 30%. The obtained water-dispersible hydroxy-containing acrylic resin (A-1) had an acid value of 33 mg KOH/g and a hydroxy value of 25 mg KOH/g.

Monomer emulsion for the core portion: The monomer emulsion for the core portion was obtained by mixing and stirring 40.0 parts of deionized water, 2.8 parts of Adeka Reasoap SR-1025, 2.1 parts of methylene bisacrylamide, 2.8 parts of styrene, 16.1 parts of methyl methacrylate, 28.0 parts of ethyl acrylate, and 21.0 parts of n-butyl acrylate.

Monomer emulsion for the shell portion: The monomer emulsion for the shell portion was obtained by mixing and stirring 17.0 parts of deionized water, 1.2 parts of Adeka Reasoap SR-1025, 0.03 parts of ammonium persulfate, 3.0 parts of styrene, 5.1 parts of 2-hydroxyethyl acrylate, 5.1 parts of methacrylic acid, 6.0 parts of methyl methacrylate, 1.8 parts of ethyl acrylate, and 9.0 parts of n-butyl acrylate.

Production Example 2

128.0 parts of deionized water and 2.0 parts of Adeka Reasoap SR-1025 (trade name, produced by Adeka, emulsifier, active ingredient: 25%) were placed in a reaction vessel equipped with a thermometer, a thermostat, a stirrer, a reflux condenser, a nitrogen inlet tube, and a dropping funnel. The mixture was stirred and mixed in a nitrogen flow, and heated to 80°C.

Subsequently, 1% of the entire amount of a monomer emulsion for the core portion, which is described below, and 5.3 parts of a 6% ammonium persulfate aqueous solution were introduced into the reaction vessel and maintained at 80°C for 15 minutes. Thereafter, the remaining monomer emulsion for the core portion was added dropwise over a period of 3 hours to the reaction vessel maintained at the same temperature. After completion of the dropwise addition, the mixture was aged for 1 hour. A monomer emulsion for the shell portion, which is described below, was then added dropwise over a period of 1 hour, followed by aging for 1 hour. Thereafter, the mixture was cooled to 30°C while gradually adding 40.0 parts of a 5% 2-(dimethylamino)ethanol aqueous solution to the reaction vessel and filtered through a 100-mesh nylon cloth, thereby obtaining a water-dispersible hydroxy-containing acrylic resin (A-2) dispersion having an average particle size of 100 nm and a solids content of 30%. The obtained water-dispersible hydroxy-containing acrylic resin (A-2) had an acid value of 13 mg KOH/g and a hydroxy value of 9 mg KOH/g.

Monomer emulsion for the core portion: The monomer emulsion for the core portion was obtained by mixing and stirring 40.0 parts of deionized water, 2.8 parts of Adeka Reasoap SR-1025, 2 parts of ethylene glycol dimethacrylate, 1 part of allyl methacrylate, 52 parts of methyl methacrylate, 12 parts of ethyl acrylate, and 10 parts of n-butyl acrylate.

Monomer emulsion for the shell portion: The monomer emulsion for the shell portion was obtained by mixing and stirring 17.0 parts of deionized water, 1.2 parts of Adeka Reasoap SR-1025, 0.03 parts of ammonium persulfate, 3 parts of styrene, 2 parts of 2-hydroxyethyl methacrylate, 2 parts of methacrylic acid, 4 parts of methyl methacrylate, 1 part of ethyl acrylate, and 11 parts of n-butyl acrylate.

Production of Base Resin Other Than Water-Dispersible Hydroxy-Containing Acrylic Resin (A)

Production of Hydroxy-containing Acrylic Resin

Production Example 3

35.0 parts of propylene glycol monopropyl ether was placed in a reaction vessel equipped with a thermometer, a thermostat, a stirrer, a reflux condenser, a nitrogen inlet tube, and a dropping funnel and heated to 85°C. A mixture of 30.0 parts of methyl methacrylate, 20.0 parts of 2-ethylhexyl acrylate, 29.0 parts of n-butyl acrylate, 15.0 parts of 2-hydroxyethyl acrylate, 6.0 parts of acrylic acid, 15.0 parts of propylene glycol monopropyl ether, and 2.3 parts of 2,2'-azobis(2,4-dimethylvaleronitrile) was then added dropwise over a period of 4 hours to the reaction vessel maintained at the same temperature. After completion of the dropwise addition, the mixture was aged for 1 hour. Thereafter, a mixture of 10.0 parts of propylene glycol monopropyl ether and 1.0 part of 2,2'-azobis(2,4-dimethylvaleronitrile) was further added dropwise over a period of 1 hour to the reaction vessel maintained at the same temperature. After completion of the dropwise addition, the mixture was aged for 1 hour. 7.4 parts of diethanolamine and 13.0 parts of propylene glycol monopropyl ether were further added, thereby obtaining a hydroxy-containing acrylic resin (AC-1) solution having a solids content of 55%. The obtained hydroxy-containing acrylic resin (AC-1) had an acid value of 47 mg KOH/g, a hydroxy value of 72 mg KOH/g, and a weight average molecular weight of 58,000.

Production Example 4

A mixed solvent of 27.5 parts of methoxy propanol and 27.5 parts of isobutanol was placed in a reaction vessel equipped with a thermometer, a thermostat, a stirrer, a reflux condenser, a nitrogen inlet tube, and a dropping funnel and heated to 110°C. 121.5 parts of a mixture comprising 25.0 parts of styrene, 27.5 parts of n-butyl methacrylate, 20.0 parts of Isostearyl Acrylate (trade name, produced by Osaka Organic Chemical Industry Ltd., branched higher alkyl acrylate), 7.5 parts of 4-hydroxybutyl acrylate, 15.0 parts of a phosphate group-containing polymerizable monomer, which is described below, 12.5 parts of 2-methacryloyloxyethyl acid phosphate, 10.0 parts of isobutanol, and 4.0 parts of t-butylperoxy octanoate was added to the above mixed solvent over a period of 4 hours. A mixture comprising 0.5 parts of t-butylperoxy octanoate and 20.0 parts of isopropanol was further added dropwise for 1 hour. Thereafter, the mixture was stirred and aged for 1 hour, thereby obtaining an acrylic resin (AC-2) solution containing a hydroxyl group and a phosphate group and having a solids content of 50%. The obtained acrylic resin (AC-2) containing a hydroxyl group and a phosphate group had an acid value of 83 mg KOH/g, a hydroxy value of 29 mg KOH/g, and a weight average molecular weight of 10,000.

Phosphate group-containing polymerizable monomer: 57.5 parts of monobutyl phosphoric acid and 41.0 parts of isobutanol were placed in a reaction vessel equipped with a thermometer, a thermostat, a stirrer, a reflux condenser, a nitrogen inlet tube, and a dropping funnel and heated to 90°C. Thereafter, 42.5 parts of glycidyl methacrylate was added dropwise over a period of 2 hours, and the mixture was then further stirred and aged for 1 hour. Subsequently, 59.0 parts of isopropanol was added, thereby obtaining a phosphate group-containing polymerizable monomer solution having a solids concentration of 50%. The obtained monomer had an acid value of 285 mg KOH/g.

Production of Hydroxy-Containing Polyester Resin

Production Example 5

109.0 parts of trimethylolpropane, 141.0 parts of 1,6-hexanediol, 126.0 parts of 1,2-cyclohexanedicarboxylic acid anhydride, and 120.0 parts of adipic acid were placed in a reaction vessel equipped with a thermometer, a thermostat, a stirrer, a reflux condenser, and a water separator. The mixture was heated from 160°C to 230°C over a period of 3 hours, followed by a condensation reaction at 230°C for 4 hours while distilling off the resulting condensation water by using the water separator. Subsequently, in order to add carboxyl groups to the resulting condensation reaction product, 38.3 parts of trimellitic anhydride was further added, followed by a reaction at 170°C for 30 minutes. Thereafter, the product was diluted with 2-ethyl-1-hexanol, thereby obtaining a hydroxy-containing polyester resin (PE-1) solution having a solids content of 70%. The obtained polyester resin had an acid value of 46 mg KOH/g, a hydroxy value of 150 mg KOH/g, and a number average molecular weight of 1,400.

Production of Effect Pigment Dispersion Containing Flake-Effect Pigment (B)

Production Example 6

In a stirring vessel, 21.4 parts (solids content: 15 parts) of Alpaste 6360NS (trade name, produced by Toyo Aluminium K.K., aluminum pigment paste, aluminum content: 70%), 10.5 parts (solids content: 5.25 parts) of the acrylic resin (AC-2) solution containing a hydroxyl group and a phosphate group obtained in Production Example 4, and 35 parts of 2-ethyl-1-hexanol were uniformly mixed, thereby obtaining an effect pigment dispersion (P-1).

Production Examples 7 to 12

Pigment dispersions (P-2) to (P-7) were obtained in the same manner as in Production Example 6, except that the formulations shown in Table 1 were used.

Table 1

| | | Production Example | | | | | | |
|---|---|---|---|---|---|---|---|---|
| | | 6 | 7 | 8 | 9 | 10 | 11 | 12 |
| Effect pigment dispersion | | P-1 | P-2 | P-3 | P-4 | P-5 | P-6 | P-7 |
| Flake-effect pigment (B) | Alpaste 6360NS | 21.4 | 17.1 | 25.7 | 35.7 | 57.1 | | 14.3 |
| | Aluminum Paste GX-3100 (Note 1) | | | | | | 52.6 | |
| Binder component other than water-dispersible hydroxy-containing acrylic resin (A) | Acrylic resin containing a hydroxyl group and a phosphate group (AC-2) | 10.5 | 8.4 | 12.6 | 17.5 | 28.0 | 28.0 | 7.0 |
| Hydrophobic solvent | 2-Ethyl-1-hexanol | 35 | 35 | 35 | 35 | 35 | 35 | 35 |
| Total | | 66.9 | 60.5 | 73.3 | 88.2 | 120.1 | 115.6 | 56.3 |

The flake-effect pigment in Note 1 in Table 1 is the following.
Note 1: Aluminum Paste GX-3100: trade name, produced by Asahi Kasei Metals Corporation, aluminum pigment paste, aluminum content: 76%

Production of Aqueous Dispersion of Water-Dispersible Cellulose-Based Rheology Control Agent (C)

Production Example 1.3

After CelluForce NCC (trade name, produced by CelluForce, sulfonic acid sodium salt nanocellulose crystals, solids content: 100%) was gradually added to deionized water stirred with a magnetic stirrer so that the solids concentration was 4%, stirring was continued for 2 hours, thereby obtaining an aqueous dispersion of a water-dispersible cellulose-based rheology control agent (C-1) (solids content: 4 mass%).

Production of Aqueous Paint Composition

Example 1

In a stirring vessel, 83.3 parts (solids content: 25.0 parts) of the water-dispersible hydroxy-containing acrylic resin (A-1) aqueous dispersion obtained in Production Example 1, 36.4 parts (solids content: 20 parts) of the hydroxy-containing acrylic resin (AC-1) solution obtained in Production Example 3, 21.4 parts (solids content: 15 parts) of the hydroxy-containing polyester resin solution (PE-1) obtained in Production Example 5, 28.6 parts (solids content: 10 parts) of a polyurethane resin (trade name: U-COAT UX-8100, produced by Sanyo Chemical Industries, Ltd., solids content: 35%), 37.5 parts (solids content: 30.0 parts) of a melamine resin (trade name: Cymel 325, produced by Allnex Japan Inc., solids content: 80%), and 66.9 parts of the effect pigment dispersion (P-1) obtained in Production Example 6 were uniformly mixed. Further, 125 parts (solids content: 2.5 parts) of a water-dispersible cellulose-based rheology control agent (trade name: Rheocrysta, produced by DKS Co. Ltd., solids content: 2%), 2-(dimethylamino)ethanol, and deionized water were added, thereby obtaining an aqueous paint composition (X-1) having a pH of 8.0 and a paint solids content of 25%.

Examples 2 to 24 and Comparative Examples 1 to 6

Aqueous paint compositions (X-2) to (X-30) were obtained in the same manner as in Example 1, except that the formulations shown in Table 2 were used.

Table 2

| | | | Example | | | | | | |
|---|---|---|---|---|---|---|---|---|---|
| | | | 1 | 2 | 3 | 4 | 5 | 6 | 7 |
| Aqueous paint composition | | | X-1 | X-2 | X-3 | X-4 | X-5 | X-6 | X-7 |
| Water-dispersible hydroxy-containing acrylic resin (A) | | Water-dispersible hydroxy-containing acrylic resin (A-1) | 83.3 | 200.0 | 116.7 | 100.0 | 100.0 | 133.3 | 150.0 |
| | | Water-dispersible hydroxy-containing acrylic resin (A-2) | | | | | | | |
| Binder component other than water-dispersible hydroxy-containing acrylic resin (A) | Hydroxy-containing acrylic resin other than water-dispersible hydroxy-containing acrylic resin (A) | Hydroxy-containing acrylic resin (AC-1) | 36.4 | | | 45.5 | 40.9 | 54.5 | |
| | Hydroxy-containing polyester resin | Hydroxy-containing polyester resin (PE-1) | 21.4 | | 28.6 | | 25.0 | | 35.7 |
| | Polyurethane resin | U-COAT UX-8100 | 28.6 | 28.6 | 42.9 | 42.9 | | | |
| Curing agent | Melamine resin | Cymel 325 | 37.5 | 37.5 | 37.5 | 37.5 | 37.5 | 37.5 | 37.5 |
| | Blocked polyisocyanate compound | Bayhydur VPLS2310 (Note 2) | | | | | | | |
| Effect pigment dispersion | | Type | P-1 | P-1 | P-1 | P-1 | P-1 | P-1 | P-1 |
| | | Amount | 66.9 | 66.9 | 66.9 | 66.9 | 66.9 | 66.9 | 66.9 |
| Water-dispersible cellulose-based rheology control agent (C) | | Rheocrysta | 125 | 125 | 125 | 125 | 125 | 125 | 125 |
| | | Aqueous dispersion of water-dispersible cellulose-based rheology control agent (C-1) | | | | | | | |
| Rheology control agent other than water-dispersible cellulose-based rheology control agent (C) | Water-soluble cellulose-based rheology control agent | HEC AH-15F (Note 3) | | | | | | | |
| | | Cellogen WS-C (Note 4) | | | | | | | |
| | Polyacrylic acid-based rheology control agent | Primal ASE-60 (Note 5) | | | | | | | |
| | Associative rheology control agent | ADEKA NOL UH-752 (Note 6) | | | | | | | |
| Content of flake-effect pigment (B) based on 100 parts by mass of resin solids content of aqueous paint composition (parts by mass) | | | 14.3 | 14.3 | 14.3 | 14.3 | 14.3 | 14.3 | 14.3 |
| Paint solids content (%) | | | 25 | 25 | 25 | 25 | 25 | 25 | 25 |

EP 4 059 619 A1

Table 2 (Continued-1)

| | | | Example | | | | | |
|---|---|---|---|---|---|---|---|---|
| | | | 8 | 9 | 10 | 11 | 12 | 13 |
| Aqueous paint composition | | | X-8 | X-9 | X-10 | X-11 | X-12 | X-13 |
| Water-dispersible hydroxy-containing acrylic resin (A) | | Water-dispersible hydroxy-containing acrylic resin (A-1) | 166.7 | | 83.3 | 83.3 | 83.3 | 83.3 |
| | | Water-dispersible hydroxy-containing acrylic resin (A-2) | | 100.0 | | | | |
| Binder component other than water-dispersible hydroxy-containing acrylic resin (A) | Hydroxy-containing acrylic resin other than water-dispersible hydroxy-containing acrylic resin (A) | Hydroxy-containing acrylic resin (AC-1) | | 27.3 | 36.4 | 36.4 | 36.4 | 36.4 |
| | Hydroxy-containing polyester resin | Hydroxy-containing polyester resin (PE-1) | | 28.6 | 21.4 | 21.4 | 21.4 | 21.4 |
| | Polyurethane resin | U-COAT UX-8100 | 57.1 | 28.6 | 28.6 | 28.6 | 28.6 | 28.6 |
| Curing agent | Melamine resin | Cymel 325 | 37.5 | 31.3 | 18.8 | 37.5 | 37.5 | 37.5 |
| | Blocked polyisocyanate compound | Bayhydur VPLS2310 (Note 2) | | | 39.5 | | | |
| Effect pigment dispersion | | Type | P-1 | P-1 | P-1 | P-1 | P-1 | P-1 |
| | | Amount | 66.9 | 66.9 | 66.9 | 66.9 | 66.9 | 66.9 |
| Water-dispersible cellulose-based rheology control agent (C) | | Rheocrysta | 125 | 125 | 125 | 500 | 400 | 50 |
| | | Aqueous dispersion of water-dispersible cellulose-based rheology control agent (C-1) | | | | | | |
| Rheology control agent other than water-dispersible cellulose-based rheology control agent (C) | Water-soluble cellulose-based rheology control agent | HEC AH-15F (Note 3) | | | | | | |
| | | Cellogen WS-C (Note 4) | | | | | | |
| | Polyacrylic acid-based rheology control agent | Primal ASE-60 (Note 5) | | | | | | |
| | Associative rheology control agent | ADEKA NOL UH-752 (Note 6) | | | | | | |
| Content of flake-effect pigment (B) based on 100 parts by mass of resin solids content of aqueous paint composition (parts by mass) | | | 14.3 | 14.3 | 14.3 | 14.3 | 14.3 | 14.3 |
| Paint solids content (%) | | | 25 | 25 | 25 | 11 | 15 | 32 |

Table 2 (Continued-2)

| | | | Example | | | | | |
|---|---|---|---|---|---|---|---|---|
| | | | 14 | 15 | 16 | 17 | 18 | 19 |
| Aqueous paint composition | | | X-14 | X-15 | X-16 | X-17 | X-18 | X-19 |
| Water-dispersible hydroxy-containing acrylic resin (A) | | Water-dispersible hydroxy-containing acrylic resin (A-1) | 83.3 | 83.3 | 83.3 | 83.3 | 83.3 | 83.3 |
| | | Water-dispersible hydroxy-containing acrylic resin (A-2) | | | | | | |
| Binder component other than water-dispersible hydroxy-containing acrylic resin (A) | Hydroxy-containing acrylic resin other than water-dispersible hydroxy-containing acrylic resin (A) | Hydroxy-containing acrylic resin (AC-1) | 36.4 | 36.4 | 36.4 | 36.4 | 36.4 | 36.4 |
| | Hydroxy-containing polyester resin | Hydroxy-containing polyester resin (PE-1) | 21.4 | 21.4 | 21.4 | 21.4 | 21.4 | 21.4 |
| | Polyurethane resin | U-COAT UX-8100 | 28.6 | 28.6 | 28.6 | 28.6 | 28.6 | 28.6 |
| Curing agent | Melamine resin | Cymel 325 | 37.5 | 37.5 | 37.5 | 37.5 | 37.5 | 37.5 |
| | Blocked polyisocyanate compound | Bayhydur VPLS2310 (Note 2) | | | | | | |
| Effect pigment dispersion | | Type | P-1 | P-1 | P-1 | P-2 | P-3 | P-4 |
| | | Amount | 66.9 | 66.9 | 66.9 | 60.5 | 73.3 | 88.2 |
| Water-dispersible cellulose-based rheology control agent (C) | | Rheocrysta | | | | 125 | 125 | 125 |
| | | Aqueous dispersion of water-dispersible cellulose-based rheology control agent (C-1) | 37.5 | 50 | 75 | | | |
| Rheology control agent other than water-dispersible cellulose-based rheology control agent (C) | Water-soluble cellulose-based rheology control agent | HEC AH-15F (Note 3) | | | | | | |
| | | Cellogen WS-C (Note 4) | | | | | | |
| | Polyacrylic acid-based rheology control agent | Primal ASE-60 (Note 5) | | | | | | |
| | Associative rheology control agent | ADEKA NOL UH-752 (Note 6) | | | | | | |
| Content of flake-effect pigment (B) based on 100 parts by mass of resin solids content of aqueous paint composition (parts by mass) | | | 14.3 | 14.3 | 14.3 | 11.5 | 16.9 | 23.0 |
| Paint solids content (%) | | | 25 | 25 | 25 | 25 | 25 | 25 |

Table 2 (Continued-3)

| | | | Example | | | | |
|---|---|---|---|---|---|---|---|
| | | | 20 | 21 | 22 | 23 | 24 |
| Aqueous paint composition | | | X-20 | X-21 | X-22 | X-23 | X-24 |
| Water-dispersible hydroxy-containing acrylic resin (A) | | Water-dispersible hydroxy-containing acrylic resin (A-1) | 83.3 | 83.3 | 83.3 | 83.3 | 83.3 |
| | | Water-dispersible hydroxy-containing acrylic resin (A-2) | | | | | |
| Binder component other than water-dispersible hydroxy-containing acrylic resin (A) | Hydroxy-containing acrylic resin other than water-dispersible hydroxy-containing acrylic resin (A) | Hydroxy-containing acrylic resin (AC-1) | 36.4 | 36.4 | 36.4 | 36.4 | 36.4 |
| | Hydroxy-containing polyester resin | Hydroxy-containing polyester resin (PE-1) | 21.4 | 21.4 | 21.4 | 21.4 | 21.4 |
| | Polyurethane resin | U-COAT UX-8100 | 28.6 | 28.6 | 28.6 | 28.6 | 28.6 |
| Curing agent | Melamine resin | Cymel 325 | 37.5 | 37.5 | 37.5 | 37.5 | 37.5 |
| | Blocked polyisocyanate compound | Bayhydur VPLS2310 (Note 2) | | | | | |
| Effect pigment dispersion | | Type | P-5 | P-6 | P-1 | P-1 | P-1 |
| | | Amount | 120.1 | 115.6 | 66.9 | 66.9 | 66.9 |
| Water-dispersible cellulose-based rheology control agent (C) | | Rheocrysta | 425 | 425 | 105 | 110 | |
| | | Aqueous dispersion of water-dispersible cellulose-based rheology control agent (C-1) | | | | | 37.5 |
| Rheology control agent other than water-dispersible cellulose-based rheology control agent (C) | Water-soluble cellulose-based rheology control agent | HEC AH-15F (Note 3) | | | | | |
| | | Cellogen WS-C (Note 4) | | | | | |
| | Polyacrylic acid-based rheology control agent | Primal ASE-60 (Note 5) | | | | 1.8 | |
| | Associative rheology control agent | ADEKA NOL UH-752 (Note 6) | | | | 1.8 | 1.8 |
| Content of flake-effect pigment (B) based on 100 parts by mass of resin solids content of aqueous paint composition (parts by mass) | | | 35.1 | 35.1 | 14.3 | 14.3 | 14.3 |
| Paint solids content (%) | | | 14 | 14 | 25 | 25 | 25 |

Table 2 (Continued-4)

| Aqueous paint composition | | | | Comparative Example | | | | | |
|---|---|---|---|---|---|---|---|---|---|
| | | | | 1 | 2 | 3 | 4 | 5 | 6 |
| | | | | X-25 | X-26 | X-27 | X-28 | X-29 | X-30 |
| Water-dispersible hydroxy-containing acrylic resin (A) | | | Water-dispersible hydroxy-containing acrylic resin (A-1) | 83.3 | 83.3 | 83.3 | | | |
| | | | Water-dispersible hydroxy-containing acrylic resin (A-2) | | | | 83.3 | | |
| Binder component other than water-dispersible hydroxy-containing acrylic resin (A) | Hydroxy-containing acrylic resin other than water-dispersible hydroxy-containing acrylic resin (A) | | Hydroxy-containing acrylic resin (AC-1) | 36.4 | 36.4 | 36.4 | 36.4 | 81.8 | 36.4 |
| | Hydroxy-containing polyester resin | | Hydroxy-containing polyester resin (PE-1) | 21.4 | 21.4 | 21.4 | 21.4 | 21.4 | 57.1 |
| | Polyurethane resin | | U-COAT UX-8100 | 28.6 | 28.6 | 28.6 | 28.6 | 28.6 | 28.6 |
| Curing agent | Melamine resin | | Cymel 325 | 37.5 | 37.5 | 37.5 | 37.5 | 37.5 | 37.5 |
| | Blocked polyisocyanate compound | | Bayhydur VPLS2310 (Note 2) | | | | | | |
| Effect pigment dispersion | Type | | | P-1 | P-1 | P-1 | P-1 | P-1 | P-1 |
| | Amount | | | 66.9 | 66.9 | 66.9 | 66.9 | 66.9 | 66.9 |
| | Rheocrysta | | | | | | | 250 | 250 |
| Water-dispersible cellulose-based rheology control agent (C) | Aqueous dispersion of water-dispersible cellulose-based rheology control agent (C-1) | | HEC AH-15F (Note 3) | 2.5 | | | | | |
| Rheology control agent other than water-dispersible cellulose-based rheology control agent (C) | Water-soluble cellulose-based rheology control agent | | Cellogen WS-C (Note 4) | | 2.5 | | | | |
| | Polyacrylic acid-based rheology control agent | | Primal ASE-60 (Note 5) | | | 8.9 | | | |
| | Associative rheology control agent | | ADEKA NOL UH-752 (Note 6) | | | | 10.7 | | |
| Content of flake-effect pigment (B) based on 100 parts by mass of resin solids content of aqueous paint composition (parts by mass) | | | | 14.3 | 14.3 | 14.3 | 14.3 | 14.3 | 14.3 |
| Paint solids content (%) | | | | 25 | 25 | 25 | 25 | 25 | 25 |

Note 2: Bayhydur VPLS2310: trade name, Sumika Bayer Urethane Co., Ltd., blocked polyisocyanate compound, solids content: 38%

Note 3: HEC AH-15F: trade name, produced by Sumitomo Seika Chemicals Co., Ltd., water-soluble cellulose-based rheology control agent, hydroxyethyl cellulose, solids content: 100%

Note 4: Cellogen WS-C: trade name, produced by DKS Co. Ltd., water-soluble cellulose-based rheology control agent, carboxymethyl cellulose, solids content: 100%

Note 5: Primal ASE-60: trade name, produced by Dow Chemical Company, polyacrylic acid-based rheology control agent, solids content: 28%

Note 6: ADEKA NOL UH-752: trade name, produced by Adeka, associative rheology control agent, solids content: 28%

Production Example 14

In a stirring vessel, 83.3 parts (solids content: 25.0 parts) of the water-dispersible hydroxy-containing acrylic resin (A-1) aqueous dispersion obtained in Production Example 1, 36.4 parts (solids content: 20 parts) of the hydroxy-containing acrylic resin (AC-1) solution obtained in Production Example 3, 21.4 parts (solids content: 15 parts) of the hydroxy-containing polyester resin solution (PE-1) obtained in Production Example 5, 28.6 parts (solids content: 10 parts) of a polyurethane resin (trade name: U-COAT UX-8100, produced by Sanyo Chemical Industries, Ltd., solids content: 35%), 37.5 parts (solids content: 30.0 parts) of a melamine resin (trade name: Cymel 325, produced by Allnex Japan Inc., solids content: 80%), and 56.3 parts of the pigment dispersion (P-7) obtained in Production Example 1.2 were uniformly mixed. Further, 2.5 parts (solids content: 0.7 parts) of a polyacrylic acid-based rheology control agent (trade name: Primal ASE-60, produced by Dow Chemical Company, solids content: 28%), 2-(dimethylamino)ethanol, and deionized water were added, thereby obtaining an aqueous paint composition (BC-1) having a pH of 8.0 and a paint solids content of 27%.

Production of Test Substrate

Test Substrate (1)

A thermosetting epoxy resin cationic electrodeposition paint composition (trade name: Elecron GT-100, produced by Kansai Paint Co., Ltd.) was applied by electrodeposition to a zinc phosphate-treated cold-rolled steel plate to a film thickness of 20 $\mu$m, and cured by heating at 170°C for 30 minutes. Subsequently, an intermediate paint composition (trade name: TP-65-2, produced by Kansai Paint Co., Ltd., polyester resin/amino resin organic solvent-based paint composition) was applied to the electrodeposition coating film to a film thickness of 35 $\mu$m, and cured by heating at 140°C for 30 minutes. Thus, a test substrate (1) with an electrodeposition coating film and an intermediate coating film formed on a steel plate was produced.

Test Substrate (2)

A thermosetting epoxy resin cationic electrodeposition paint composition (trade name: Elecron GT-100, produced by Kansai Paint Co., Ltd.) was applied by electrodeposition to a zinc phosphate-treated cold-rolled steel plate to a film thickness of 20 $\mu$m, and cured by heating at 170°C for 30 minutes. Subsequently, an intermediate paint composition (trade name: WP-505T, produced by Kansai Paint Co., Ltd., polyester resin/amino resin aqueous paint composition) was applied to the electrodeposition coating film to a film thickness of 20 $\mu$m, and allowed to stand for 2 minutes, followed by preheating at 80°C for 3 minutes. Thus, a test substrate (2) with a cured electrodeposition coating film. and an uncured intermediate coating film formed on a steel plate was produced.

Production of Coated Test Plate

Example 25

A multilayer coating film comprising base coats and a clear coat was formed on the test substrate (1) obtained above by using the aqueous paint composition (X-1) as a paint for forming a base coat in the 2-coat 1-bake method in the above method I for forming a coating film. Specifically, the aqueous paint composition (X-1) obtained in Example 1 was electrostatically applied to the test substrate (1) obtained above by using a rotary atomization electrostatic coating machine to a cured film thickness of 7.5 $\mu$m to form a first base coating film. After the coated substrate was allowed to stand for 1 minute, the aqueous paint composition (X-1) obtained in Example 1 was electrostatically applied to the first base coating film by using a rotary atomization electrostatic coating machine to a cured film thickness of 7.5 $\mu$m to form a second base coating film. The coated substrate was allowed to stand for 3 minutes and then preheated at 80°C for 3 minutes. Thereafter, an acrylic resin organic solvent-based top clear paint composition (Y-1) (trade name: Magicron KINO-1210, produced by Kansai Paint Co., Ltd., the base resin/crosslinking agent being a combination of a carboxy-containing resin and an epoxy-containing resin) was electrostatically applied to the second base coating film by using a rotary atomization electrostatic coating machine to a cured film thickness of 35 $\mu$m to form a clear coating film. The coated substrate was allowed to stand for 7 minutes and then heated at 140°C for 30 minutes to simultaneously cure the base coating films and the clear coating film, thereby obtaining a coated test plate.

Examples 26 to 43 and 46 to 48, and Comparative Examples 7 to 12

Coated test plates were produced in the same manner as in Example 25, except that the aqueous paint compositions shown in Table 3 were used in place of the aqueous paint composition (X-1) and the cured film thicknesses of the first base coating film and the second base coating film were as shown in Table 3.

Example 44

The aqueous paint composition (BC-1) obtained in Production Example 14 was electrostatically applied to the test substrate (1) obtained above by using a rotary atomization electrostatic coating machine to a cured film thickness of 11 $\mu$m to form a first base coating film. After the coated substrate was allowed to stand for 1 minute, the aqueous paint composition (X-20) obtained in Example 20 was electrostatically applied to the first base coating film by using a rotary atomization electrostatic coating machine to a cured film thickness of 4 $\mu$m to form a second base coating film. The coated substrate was allowed to stand for 3 minutes and then preheated at 80°C for 3 minutes. Thereafter, an acrylic resin organic solvent-based top clear paint composition (Y-1) (trade name: Magicron KINO-1210, produced by Kansai Paint Co., Ltd.) was electrostatically applied to the second base coating film by using a rotary atomization electrostatic coating machine to a cured film thickness of 35 $\mu$m to form a clear coating film. The coated substrate was allowed to stand for 7 minutes and then heated at 140°C for 30 minutes to simultaneously cure the base coating films and the clear coating film, thereby obtaining a coated test plate.

Example 45

A coated test plate was produced in the same manner as in Example 44, except that the aqueous paint composition (X-21.) obtained in Example 21 was used in place of the aqueous paint composition (X-20).

Example 49

The aqueous paint composition (X-1) obtained in Example 1 was electrostatically applied to the test substrate (1) obtained above by using a rotary atomization electrostatic coating machine to a cured film thickness of 7.5 $\mu$m to form a first base coating film. After the coated substrate was allowed to stand for 1 minute, the aqueous paint composition (X-1) obtained in Example 1 was electrostatically applied to the first base coating film by using a rotary atomization electrostatic coating machine to a cured film thickness of 7.5 $\mu$m to form a second base coating film. The coated substrate was allowed to stand for 3 minutes and then preheated at 80°C for 3 minutes. Thereafter, an acrylic resin organic solvent-based top clear paint composition (Y-2) (trade name: KINO6510, produced by Kansai Paint Co., Ltd., the base resin/crosslinking agent being a combination of a hydroxy-containing acrylic resin and a polyisocyanate compound) was electrostatically applied to the second base coating film by using a rotary atomization electrostatic coating machine to a cured film thickness of 35 $\mu$m to form a clear coating film. The coated substrate was allowed to stand for 7 minutes and then heated at 120°C for 30 minutes to simultaneously cure the base coating films and the clear coating film, thereby obtaining a coated test plate.

Example 50

A multilayer coating film comprising base coats and a clear coat was formed on the test substrate (2) obtained above by using the aqueous paint composition (X-1) as a paint for forming a base coat in the 3-coat 1-bake method in the above method II for forming a coating film. Specifically, the aqueous paint composition (X-1) obtained in Example 1 was electrostatically applied to the test substrate (2) obtained above by using a rotary atomization electrostatic coating machine to a cured film thickness of 7.5 μm to form a first base coating film. After the coated substrate was allowed to stand for 1 minute, the aqueous paint composition (X-1) obtained in Example 1 was electrostatically applied to the first base coating film by using a rotary atomization electrostatic coating machine to a cured film thickness of 7.5 μm to form a second base coating film. The coated substrate was allowed to stand for 3 minutes and then preheated at 80°C for 3 minutes. Thereafter, an acrylic resin organic solvent-based top clear paint composition (Y-1) (trade name: Magicron KINO-1210, produced by Kansai Paint Co., Ltd.) was electrostatically applied to the second base coating film by using a rotary atomization electrostatic coating machine to a cured film thickness of 35 μm to form a clear coating film. The coated substrate was allowed to stand for 7 minutes and then heated at 140°C for 30 minutes to simultaneously cure the uncured intermediate coating film, the uncured base coating films, and the uncured clear coating film, thereby preparing a coated test plate.

Evaluation Test

The following evaluation test was performed using the obtained coated test plates. Table 3 shows the results.

Brilliance

The L* value at a receiving angle of 15 degrees (L*15 value) and the L* value at a receiving angle of 75 degrees (L*75 value) were measured for the obtained coated test plates with a multi angles spectrophotometer (trade name: MA-68II, produced by x-Rite). The flip-flop values (FF values) of the coating films on the coated test plates were calculated according to the following formula, and evaluation was made according to the following criteria. Specifically, the L* value at a receiving angle of 15 degrees (L*15 value) refers to the L* value of light received at an angle of 15 degrees deviated from a specular angle toward a measurement light when the measurement light is illuminated on the surface of an object to be measured at an angle of 45 degrees with respect to the axis perpendicular to the surface of the object to be measured, and the L* value at a receiving angle of 75 degrees (L*75 value) refers to the L* value of light received at an angle of 75 degrees deviated from a specular angle toward a measurement light when the measurement light is illuminated in the same manner. A and B are regarded as acceptable levels.

$$\text{FF value} = \text{L*15 value} / \text{L*75 value}$$

A: The FF value was 3.5 or more.
B: The FF value was 3.4 or more and less than 3.5.
C: The FF value was less than 3.4.

Table 3

| | | Test substrate | First base coat paint | | Second base coat paint | | Clear paint composition | Evaluation result |
|---|---|---|---|---|---|---|---|---|
| | | | Type | Cured film thickness [μm] | Type | Cured film thickness [μm] | Type | Brilliance |
| Ex. | 25 | (1) | X-1 | 7.5 | X-1 | 7.5 | Y-1 | A |
| | 26 | (1) | X-2 | 7.5 | X-2 | 7.5 | Y-1 | A |
| | 27 | (1) | X-3 | 7.5 | X-3 | 7.5 | Y-1 | A |
| | 28 | (1) | X-4 | 7.5 | X-4 | 7.5 | Y-1 | A |
| | 29 | (1) | X-5 | 7.5 | X-5 | 7.5 | Y-1 | A |
| | 30 | (1) | X-6 | 7.5 | X-6 | 7.5 | Y-1 | A |
| | 31 | (1) | X-7 | 7.5 | X-7 | 7.5 | Y-1 | A |
| | 32 | (1) | X-8 | 7.5 | X-8 | 7.5 | Y-1 | A |
| | 33 | (1) | X-9 | 7.5 | X-9 | 7.5 | Y-1 | A |
| | 34 | (1) | X-10 | 7.5 | X-10 | 7.5 | Y-1 | A |
| | 35 | (1) | X-11 | 7.5 | X-11 | 7.5 | Y-1 | A |
| | 36 | (1) | X-12 | 7.5 | X-12 | 7.5 | Y-1 | A |
| | 37 | (1) | X-13 | 7.5 | X-13 | 7.5 | Y-1 | B |
| | 38 | (1) | X-14 | 7.5 | X-14 | 7.5 | Y-1 | B |
| | 39 | (1) | X-15 | 7.5 | X-15 | 7.5 | Y-1 | A |
| | 40 | (1) | X-16 | 7.5 | X-16 | 7.5 | Y-1 | A |
| | 41 | (1) | X-17 | 9 | X-17 | 9 | Y-1 | B |
| | 42 | (1) | X-18 | 7 | X-18 | 7 | Y-1 | A |
| | 43 | (1) | X-19 | 6 | X-19 | 6 | Y-1 | A |
| | 44 | (1) | BC-1 | 11 | X-20 | 4 | Y-1 | A |
| | 45 | (1) | BC-1 | 11 | X-21 | 4 | Y-1 | A |
| | 46 | (1) | X-22 | 7.5 | X-22 | 7.5 | Y-1 | B |
| | 47 | (1) | X-23 | 7.5 | X-23 | 7.5 | Y-1 | B |
| | 48 | (1) | X-24 | 7.5 | X-24 | 7.5 | Y-1 | A |
| | 49 | (1) | X-1 | 7.5 | X-1 | 7.5 | Y-2 | B |
| | 50 | (2) | X-1 | 7.5 | X-1 | 7.5 | Y-1 | A |
| Comp. Ex. | 7 | (1) | X-25 | 7.5 | X-25 | 7.5 | Y-1 | C |
| | 8 | (1) | X-26 | 7.5 | X-26 | 7.5 | Y-1 | C |
| | 9 | (1) | X-27 | 7.5 | X-27 | 7.5 | Y-1 | C |
| | 10 | (1) | X-28 | 7.5 | X-28 | 7.5 | Y-1 | C |
| | 11 | (1) | X-29 | 7.5 | X-29 | 7.5 | Y-1 | C |
| | 12 | (1) | X-30 | 7.5 | X-30 | 7.5 | Y-1 | C |

**Claims**

1. An aqueous paint composition comprising

(A) a water-dispersible hydroxy-containing acrylic resin,
(B) a flake-effect pigment, and
(C) a water-dispersible cellulose-based rheology control agent,

wherein the content of the flake-effect pigment (B) is within a range of 1 to 50 parts by mass, based on 100 parts by mass of the resin solids content of the aqueous paint composition, and
the aqueous paint composition has a solids content of more than 10 mass% and 35 mass% or less.

2. The aqueous paint composition according to claim 1, wherein the water-dispersible hydroxy-containing acrylic resin (A) comprises (A') a water-dispersible hydroxy-containing acrylic resin having a core/shell multilayer structure that contains as constituents

a core of a copolymer (I) obtained by copolymerizing 0.1 to 30 mass% of (c) a polymerizable unsaturated monomer having at least two polymerizable unsaturated groups per molecule and 70 to 99.9 mass% of (d) a polymerizable unsaturated monomer having one polymerizable unsaturated group per molecule, and
a shell of a copolymer (II) obtained by copolymerizing 1 to 35 mass% of (a) a hydroxy-containing polymerizable unsaturated monomer, 5 to 60 mass% of (e) a hydrophobic polymerizable unsaturated monomer, and 5 to 94 mass% of (f) a polymerizable unsaturated monomer other than the hydroxy-containing polymerizable unsaturated monomer (a) and the hydrophobic polymerizable unsaturated monomer (e).

3. The aqueous paint composition according to claim 1 or 2, wherein the water-dispersible cellulose-based rheology control agent (C) is a water-dispersible cellulose-based rheology control agent containing at least one functional group selected from the group consisting of a phosphate group, a carboxyl group, and a sulfonate group.

4. A coated article comprising a substrate and a cured coating film formed on the substrate, the cured coating film being formed by curing the aqueous paint composition of any one of claims 1 to 3.

5. A method for forming a multilayer coating film, the method comprising the steps of

(1) applying a base coat paint composition (X) to a substrate to form an uncured base coating film;
(2) applying a clear coat paint composition (Y) to the uncured base coating film to form an uncured clear coating film; and
(3) heating the uncured base coating film and the uncured clear coating film to simultaneously cure both the coating films;
wherein the base coat paint composition (X) is the aqueous paint composition of any one of claims 1 to 3.

| | | |
|---|---|---|
| **INTERNATIONAL SEARCH REPORT** | International application No. | |
| | PCT/JP2020/042037 | |

**A. CLASSIFICATION OF SUBJECT MATTER**

B05D 1/36(2006.01)i; B05D 5/06(2006.01)i; B05D 7/24(2006.01)i; B32B 27/20(2006.01)i; B32B 27/30(2006.01)i; C09D 5/00(2006.01)i; C09D 5/02(2006.01)i; C09D 133/14(2006.01)i; B32B 15/082(2006.01)i; C09D 7/43(2018.01)i; C09D 7/61(2018.01)i; C09D 7/62(2018.01)i
FI:       C09D133/14; C09D7/62; C09D5/02; C09D5/00 D; B05D1/36 B; B05D7/24
          303J; B05D7/24 303A; B05D7/24 302P; B05D7/24 303E; B32B27/20 A;
          B32B27/30 B; B32B15/082 Z; C09D7/43; C09D7/61; B05D5/06 101A

According to International Patent Classification (IPC) or to both national classification and IPC

**B. FIELDS SEARCHED**

Minimum documentation searched (classification system followed by classification symbols)

C09D133/14; B05D1/36; B05D5/06; B05D7/24; B32B15/082; B32B27/20; B32B27/30; C09D5/00; C09D5/02; C09D7/43; C09D7/61; C09D7/62

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
    CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2019/142639 A1 (KANSAI PAINT CO., LTD.) 25 July 2019 (2019-07-25) claims, examples, paragraph [0053] | 1–5 |
| X | JP 07-331118 A (KANSAI PAINT CO., LTD.) 19 December 1995 (1995-12-19) claims, examples, paragraphs [0003]-[0004], [0009]-[0018] | 1–5 |
| A | WO 2018/092874 A1 (KANSAI PAINT CO., LTD.) 24 May 2018 (2018-05-24) claims, examples | 1–5 |
| A | WO 2018/092878 A1 (KANSAI PAINT CO., LTD.) 24 May 2018 (2018-05-24) claims, examples | 1–5 |

|  |  |  |  |
|---|---|---|---|
| ☐ | Further documents are listed in the continuation of Box C. | ☒ | See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 January 2021 (15.01.2021) | 26 January 2021 (26.01.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/042037 |

| Patent Documents referred in the Report | Publication Date | Patent Family | Publication Date |
| --- | --- | --- | --- |
| WO 2019/142639 A1 | 25 Jul. 2019 | CA 3088498 A1 claims, examples, paragraph [0053]<br>CN 111655386 A<br>EP 3741470 A1 | |
| JP 07-331118 A | 19 Dec. 1995 | (Family: none) | |
| WO 2018/092874 A1 | 24 May 2018 | CA 3044198 A1<br>claims, examples<br>CN 110114151 A<br>EP 3542910 A1 | |
| WO 2018/092878 A1 | 24 May 2018 | CA 3044199 A1<br>claims, examples<br>CN 109996611 A<br>EP 3542909 A1<br>US 2020/071533 A1 | |

Form PCT/ISA/210 (patent family annex) (January 2015)

**EP 4 059 619 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019205552 A
- JP 2019238571 A
- JP 2009155537 A